# EUROPEAN PATENT SPECIFICATION

(11) **EP 2 175 426 B1**
(45) Date of publication and mention of the grant of the patent: **14.08.2013**
(21) Application number: 09010981.0
(22) Date of filing: 27.08.2009
(51) Int. Cl.: G07C 9/00, G06F 21/31

(54) **Security system, security method and recording medium storing security program**
Sicherheitssystem, Sicherheitsverfahren und Sicherheitsprogramm zum Speichern auf einem Aufzeichnungsmedium
Système de sécurité, procédé de sécurité et support d'enregistrement stockant un programme de sécurité

(30) Priority: 06.10.2008 JP 2008259955
(43) Date of publication of application: 14.04.2010
(73) Proprietor: Fujitsu Limited, Kawasaki-shi, Kanagawa 211-8588 (JP)
(72) Inventor: Tsuji, Kentaro, Kanagawa 211-8588 (JP); Segawa, Eigo, Kanagawa 211-8588 (JP); Shiohara, Morito, Kanagawa 211-8588 (JP)
(74) Representative: HOFFMANN EITLE

(56) References cited:
- EP-A2- 1 835 468
- US-A1- 2002 186 121
- US-A1- 2006 014 532
- US-A1- 2007 083 915

## Description

### FIELD

The embodiments discussed herein are related to security in a plurality of facilities used by many people, and to a security system, a security program and a security method to control authority for using areas such as facilities and to prevent service provision, etc. for a person who does not have the authority therefor.

### BACKGROUND

A security system of unlocking a door, logging in to a PC (personal computer), etc. by using an ID (IDentification) card or a password for personal authentication is popularized. In such system, an authentication operation is requested every facility such as a room or every device. In case of accompanying a move such as ingress to facilities, authentication requested all ingress is complicated and very troublesome. Therefore, there is a system that a position of an authenticated person is grasped by using combination of devices such as a camera and a laser sensor, and the authenticated person can unlock a door and log in to a PC without re-authentication for enhancing convenience.

Concerning such security system, Japanese Laid-Open Patent Publication No. 2004-185484 discloses that a person is traced by a camera and when certification is performed, a person's move trace is correlated with certification information, thereby, unlocking is judged on the basis of checking an attribute of a person's move trace (being certified) without certifying a person in front of a door.

Japanese Laid-Open Patent Publication No. 09-16523 discloses that different authentication is requested according to importance of operation contents and even if authority is acquired by the authentication, the authority is returned after certain time has passed, thereby, an unauthorized person is prevented from performing an important operation.

Japanese Laid-Open Patent Publication No. 09-297735 discloses that during service provision for a user, if another user who does not use the service comes in a service usable zone, the service is interrupted to prevent another user from being provided the service.

Japanese Laid-Open Patent Publication No. 2003-223421 discloses that operating errors and illicit operations are prevented by enabling operations only when a person of access authority (high-user) is present other than a user, so that a third party observes an operation of the user.

In the system of correlating a person's move trace to certification information (Japanese Laid-Open Patent Publication No. 2004-185484), if one person crosses another person and another person is erroneously traced after certification, a certified result is correlated with a third party other than an original. This case may cause a risk of lowering security that an uncertified person is accepted and service is provided for the person. It is needed that only a certified person holds use authority and service provision for another person posing as the certified person is prevented.

In the case where different authentication is performed according to importance of operation contents (Japanese Laid-Open Patent Publication No. 09-16523), since authority is returned after certain time has passed, it is possible for another person to take the place of an authenticated person within the certain time. If the certain time is set more shortly in order to prevent this possibility, convenience is lost.

In the system that during service provision for a user, if another user who does not use the service comes in a service usable zone, the service is interrupted (Japanese Laid-Open Patent Publication No. 09-297735), there is a problem that when another user and the user approach and replace each other, illicit use becomes possible since only an operation of a device is controlled but user' s access authority is not changed even if another user approaches.

In the system that operations are enabled only when a person of access authority (high-user) is present other than a user, so that a third party observes an operation of the user (Japanese Laid-Open Patent Publication No. 2003-223421), there is a problem that an access is enabled irrelevantly to a state of a high-authority user once user authentication is performed and the user obtains operation authority because a position of a person is not detected.

Concerning such requests and problems, there is no disclosure nor suggestion thereof in any of Japanese Laid-Open Patent Publications Nos. 2004-185484, 09-16523, 09-297735 and 2003-223421, and no disclosure or suggestion about the structure, etc. for solving them is presented.

Further, US 2006/014532 A1 shows proximity-based authorization and considers the problem that it would be advantageous in many situation if execution of commands and reading and writing of files could be restricted not just on the identity of the user who is attempting it, but also on whether or not there are other people in the vicinity of that user, for example to allow a hospital secretary from reading/writing in a patient's file only in the presence of a doctor or a nurse. US 2006/014532 A1 shows a GPS receiver, which receives satellite-based signals and thus determines location of a wireless terminal, which all people within a specific area must carry. This enables the presence and identity of a person to be inferred from the presence and identity of their wireless terminal.

Further, US 2002/186121 A1 shows a service provision method and apparatus in a distributed system, for example for entry and exit management, theft prevention, and goods management, wherein a user may request a service from a service device (electronic lock) via a mobile terminal, which the user uses to send a user ID. Upon the request, the mobile terminal detects a peripheral device of the user, which exists in the periphery of the mobile terminal.

Further, US 2007/083915 discloses an authentication system involving person proximity. When a first person comes closed to a second person having higher authorisation, then the authorisation level of the second person will be reduced to the level of the first person.

### SUMMARY

Accordingly, it is an object in one aspect of the invention to provide enhanced convenience by reducing the number of an authentication request and to prevent use authority given by authentication from being used by another person concerning security in using facilities, etc.

It is an object in another aspect of the invention to provide maintenance of use authority without authentication every time once the authentication is performed, and to prevent use by another person who does not have the use authority concerning security in using facilities, etc.

According to an aspect of embodiments of the invention, there is provided a security system to give a user in a specific area use authority based on authentication, and to permit use of the specific area by the use authority. The security system includes an authentication unit to authenticate a user; a position detection unit to detect a position and a move of a user, the user being within a monitored range, the monitored range being set for monitoring a user to whom the use authority for the specific area is given based on authentication of the authentication unit; and a use authority control unit to monitor the position and the move of the user to whom the use authority is given by a detection output of the position detection unit, and, if a distance between users is equal to or below a predetermined value, to change the use authority which is given to each user.

In the above structure, since at least one of the position and move of the user who is authenticated by the authentication unit is detected by the position detection unit, the use authority control unit monitors at least one of the position and move of the user to whom use authority is given based on the authentication by the authentication unit by the detection output of the position detection unit, and if the distance between users is equal to or below the predetermined value, use authority given to each user is changed. When the user contacts with another user, that is, when the distance between users is equal to or below the predetermined value, security level is improved by changing use authority. If there is no contact with another user, the authenticated user can maintain use authority thereof to enable convenience to be enhanced and to enable high security to be maintained.

According to another aspect of the embodiments of the invention, there is provided a security method to give a user in a specific area use authority based on authentication, and to permit use of the specific area by the use authority, the security method comprising: authenticating a user; detecting a position and a move of a user, the user being within a monitored range, the monitored range being set for monitoring a user to whom the use authority for the specific area is given based on said authenticating; and monitoring the position and the move of the user to whom the use authority is given, and, if a distance between users is equal to or below a predetermined value, changing the use authority which is given to each user.

According to another aspect of the embodiments of the invention, there is provided a computer-readable recording medium storing a security program that includes a function to give a user in a specific area use authority based on authentication, and to permit use of the specific area by the use authority, and that causes a computer to execute the function, the program comprising: authenticating a user; taking in detection information representing a position and a move of a user, the user being within a monitored range, the monitored range being set for monitoring a user to whom the use authority for the specific area is given based on said authenticating; and monitoring the position and the move of the user to whom the use authority is given by the detection information, and, if a distance between users is equal to or below a predetermined value, changing the use authority which is given to each user.

Other objects, features and advantages of the embodiments of the present invention are more clearly understood by referring to the attached drawings and each of the embodiments.

### BRIEF DESCRIPTION OF DRAWINGS

Fig. 1 depicts a security system according to a first embodiment;
Fig. 2 depicts a hardware configuration of a processor;
Fig. 3 depicts an authentication information data table;
Fig. 4 depicts a person information data table;
Fig. 5 is a flowchart depicting processing procedure of a management process of a user's state according to the first embodiment;
Fig. 6 is a flowchart depicting processing procedure of a control process of opening and closing a door according to the first embodiment;
Fig. 7 depicts an example of using a security system;
Fig. 8 depicts an example of users' authority;
Fig. 9 depicts an example of move paths of users;
Fig. 10 depicts an example of changing users' authority to enter a room;
Fig. 11 depicts an authority level-room entrance conversion table;
Fig. 12 depicts an authentication information data table using authority levels;
Fig. 13 depicts a personal information data table using authority levels;
Fig. 14 depicts an example of users' authority using authority levels;
Fig. 15 depicts an example of changing authority using authority levels;
Fig. 16 depicts a security system according to a second embodiment;
Fig. 17 depicts an authentication information data table;
Fig. 18 depicts a person information data table;
Fig. 19 is a flowchart depicting processing procedure of a management process of a use' s state according to the second embodiment;
Fig. 20 is a flowchart depicting processing procedure of control processes of opening and closing a door, and logging in to a PC;
Fig. 21 depicts an example of the security system according to the second embodiment;
Fig. 22 depicts an example of users' authority;
Fig. 23 depicts an example of move paths of a user;
Fig. 24 depicts an example of changing users' authority;
Fig. 25 depicts an authority level-usable information conversion table;
Fig. 26 depicts an example of users' authority using authority levels;
Fig. 27 depicts an example of changing authority using authority levels;
Fig. 28 is a flowchart depicting processing procedure of a management process of a user's state according to a third embodiment;
Fig. 29 is a flowchart depicting processing procedure of a control process of opening and closing a door according to the third embodiment;
Figs. 30A and 30B depict an example of an authentication operation; and
Fig. 31A and 31B depict an example of another authentication operation.

### DESCRIPTION OF EMBODIMENTS

The embodiments of the present invention give use authority to a user by authentication. Authentication for a user who is given the use authority once can be omitted, and convenience is enhanced. Moreover, correspondingly to a distance between a user and another user (contact with the others, etc.), the use authority is changed, and thereby, use of the authority by the others who do not have the use authority is prevented. That is, if a user approaches another user who has lower authority than the user after authentication, a level of the use authority is lowered. For improvement of convenience by reduction of the number of authentication, the use authority is changed by a distance between users (approach), and use of a room without the use authority and logging in a PC without the use authority are prevented. Thus, prevention of lowering security and enhancement of convenience are promoted.

### First Embodiment

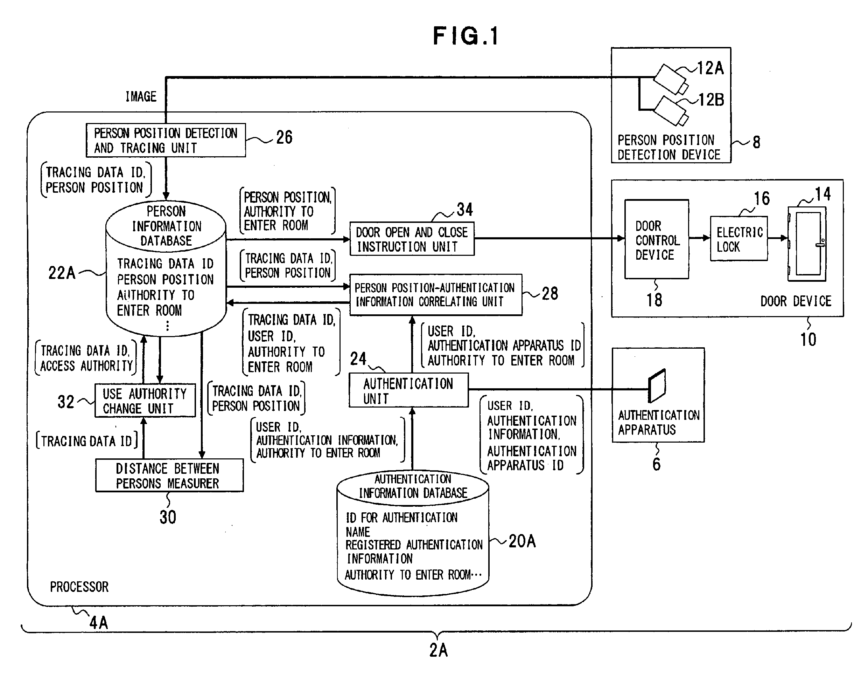

A first embodiment is described with reference to Fig. 1. Fig. 1 depicts a security system according to the first embodiment. The structure depicted in Fig. 1 is one example and the present invention is not limited to such structure.

This security system 2A is configured as follows: a person who enters into a monitored range set as a particular area is requested to be authenticated; use authority is given by establishment of the authentication, and a user who is given the use authority is traced to be maintained the use authority without requesting authentication repeatedly; positions of all the people within the monitored range are detected by a position detection means (unit) such as a camera and a radar, and if a person who has the use authority approaches a person who does not have the use authority, the use authority is controlled in accordance with the use authority of the approaching person, and service provision for those who do not have the use authority or those who have limited use authority is prevented even if persons (approaching persons) replaces each other and a replaced person is erroneously traced.

This security system 2A includes, as depicted in Fig. 1, a processor 4A, an authentication apparatus 6, a person position detection device 8 and a door device 10. The processor 4A is a control means (unit) to control use authority based on authentication, and detection and tracing of a person. Concretely, the processor 4A makes the authentication apparatus 6 perform authentication, the person position detection device 8 detect and trace a person position as a user tracing means (unit), and the door device 10 lock or unlock, etc. on the basis of these authentication and tracing of a person. The control of use authority includes change, lowering and cancellation of use authority.

The authentication apparatus 6 is an input means (unit) to input authentication information of biometrics information such as fingerprints, veins and irises, and information used for authentication such as user ID and authentication apparatus ID.

The person position detection device 8 is, for example, configured by imaging devices 12A and 12B as a single or a plurality of image capturing means (units). The person position detection device 8 provides an image representing a detected person and tracing thereof for the processor 4A. The imaging devices 12A and 12B are means (units) locating a person such as a laser sensor and an RFID (Radio Frequency Identification) reader. A means (unit) having such function can be replaced with the imaging device 12A and 12B. That is, the person position detection device 8 configures a user tracing means (unit) along with the processor 4A.

The door device 10 includes a door 14, an electric lock 16 and a door control device 18. The door 14 is an open and close door disposed at an entrance of a room which is a monitored range. The electric lock 16 unlocks and locks the door 14 as a means (part) to permit and prohibit a person through the door 14. The door control device 18 is controlled by the processor 4A, and is a control means (unit) to lock and unlock the electric lock 16.

The processor 4A includes an authentication information database 20A, a person information database 22A, an authentication unit 24, a person position detection and tracing unit 26, a person position-authentication information correlating unit 28, a distance between persons measurer 30, a use authority change unit 32 and a door open and close instruction unit 34 as means (unit) controlling use authority based on authentication, and detection and tracing of a person.

The authentication information database 20A is a database where information for executing a user authentication process such as user ID managing authentication information of a user, a name of a registered person, registered authentication information determining whether to be an original person compared with authentication information and authority to enter a room to represent a door through which the registered person can be enter. This authentication information database 20A stores information representing ID for authentication, a name, registered authentication information, authority to enter a room, etc.

The person information database 22A is a database where information representing a person's current status is registered for each person. The information representing a person's current status is tracing data ID managing tracing data, user ID representing whose the trace data is, authority to enter a room to represent a door which can be currently unlocked, a person's current position, move trace and so on. The person information database 22A stores person information such as tracing data ID, a person's position and authority to enter a room.

The authentication unit 24 is an authentication means (unit) executing authentication for a user based on input authentication information such as biometrics information inputted into the authentication apparatus 6 and registered authentication information in the authentication information database 20A. The authentication unit 24 checks input authentication information such as user ID, authentication information and authentication apparatus ID inputted from the authentication apparatus 6 with registered information such as user ID, authentication information and authority to enter a room in the authentication information database 20A. As a result of authentication thereof, the user ID, the authentication apparatus ID, the authority to enter a room, etc. are outputted to be provided for the person position-authentication information correlating unit 28.

The person position detection and tracing unit 26 is one example of a position detection means (unit) detecting at least one of a user's position and move. The person position detection and tracing unit 26 detects a person from an image obtained by the imaging devices 12A and 12B, detects a position of a person, and traces a move thereof to generate person information (user information) such as tracing data ID and a person's position. This person information is stored into the person information database 22A.

The person position-authentication information correlating unit 28 is a means (unit) correlating authentication information with a person position to give access authority to a user as use authority. In this person position-authentication information correlating unit 28, tracing data ID, user ID and authority to enter a room are correlated with tracing data ID and a person position in the person information database 22A.

The distance between persons measurer 30 is a means (unit) reading out a person's position information from the person information database 22A to measure a distance between users. That is, in the distance between persons measurer 30, a distance between persons is measured from tracing data ID, and it is detected whether the distance is equal to or under a predetermined value, that is, whether a user is in a predetermined distance from another user.

The use authority change unit 32 is a means (unit) changing access authority given to a user according to a distance measured by the distance between persons measurer 30. The use authority change unit 32 changes access authority for a user according to tracing data ID

The door open and close instruction unit 34 is a means (unit) instructing open and close of the door 14 from a user's position and access authority. An instruction signal of the open and close is outputted to the door control device 18 of the door device 10. In this case, the door open and close instruction unit 34 gives authority to enter a room according to a person position. The door control device 18 locks and unlocks the electric lock 16 of the door 14 based on instruction from the door open and close instruction unit 34.

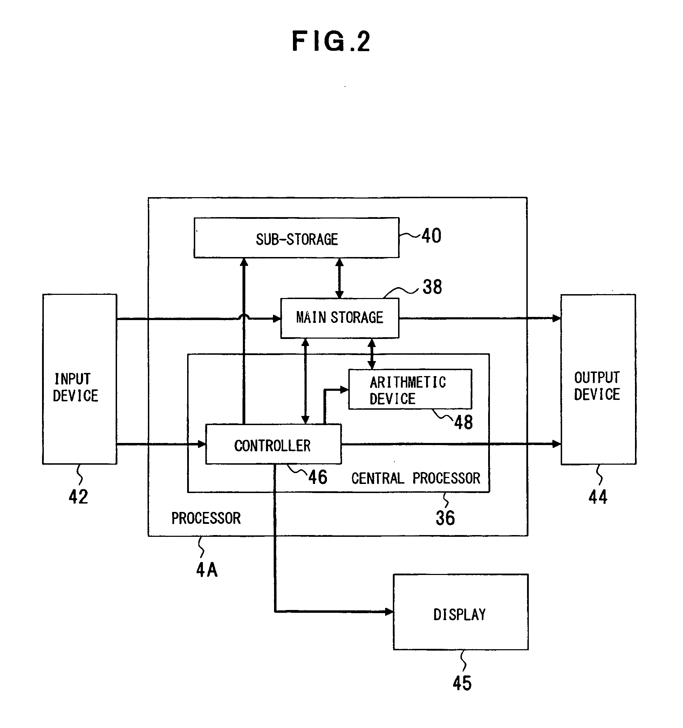

A hardware configuration of the processor 4A is described with reference to Fig. 2. Fig. 2 depicts a hardware configuration of a processor. The configuration depicted in Fig. 2 is one example and the present invention is not limited to such configuration.

This processor 4A provides hardware for realizing the above described function. As depicted in Fig. 2, the processor 4A is configured by a personal computer, etc. providing a central processor 36, a main storage 38 and a sub-storage 40. To the processor 4A, an input device 42, an output device 44 as an output means (unit) and a display 45 are connected.

The central processor 36 provides a controller 46 and an arithmetic device 48. The central processor 36 is configured by a CPU (Central Processing Unit), executes an OS (Operating System) and an application in the main storage 38, and composes, along with a RAM (Random-Access Memory), function units such as the above described authentication unit 24, the person position detection and tracing unit 26, the person position-authentication information correlating unit 28, the distance between persons measurer 30, the use authority change unit 32 and the door open and close instruction unit 34. The controller 46 controls the main storage 38, the sub-storage 40 and the arithmetic device 48 to control writing and reading data, arithmetic calculation, etc. The arithmetic device 48 executes various types of arithmetic calculation such as verification of authentication information, arithmetic calculation of measuring distance between persons and giving authority to a user.

The main storage 38 is a means (unit) storing a program, etc. The main storage 38 is configured by a recording medium storing the above described OS and various application programs such as a security program. The sub-storage 40 is configured by a data storing means (part) and a recording medium such as a RAM, and composes various databases such as the above described authentication information database 20A and the person information database 22A.

The input device 42 is a means (unit) for inputting various data. This input device 42 includes the authentication apparatus 6 for executing authentication, one or more of the imaging devices 12A and 12B for grasping a person position in a monitored range.

The output device 44 is a means (unit), in response to an arithmetic calculation output and a control output from the processor 4A, executing an operation corresponding thereto. This output device 44 includes the above described door device 10. The door control device 18 controls locking and unlocking the electric key 16 of the door 14 by a control signal outputted from the processor 4A.

The display 45 is a means (part) displaying result information and notification information, and is configured, for example, by an LCD (Liquid Crystal Display) or a CRT (Cathode-Ray Tube). This display 45 is used for a call on re-authentication, etc.

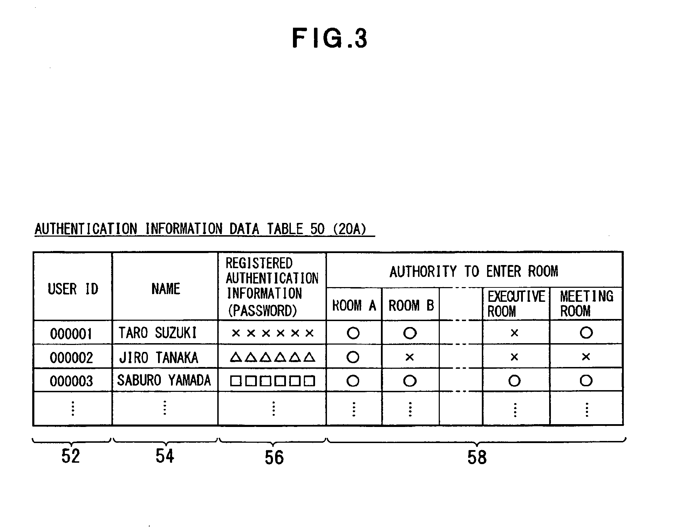

The authentication information database 20A is described with reference to Fig. 3. Fig. 3 depicts an authentication information data table. The structure depicted in Fig. 3 is one example and the present invention is not limited to such structure.

For the authentication information database 20A (Fig. 1), an authentication information data table 50 (Fig. 3) is set. In this case, a room A, a room B···an executive room and a meeting room are set, as monitored areas. For this authentication information data table 50, as depicted in Fig. 3, user ID 52, a name 54, registered authentication information 56 and authority to enter a room 58 are set. For the user ID 52, the name 54 of a user and, for example, a password as the registered authentication information 56 are set. The authority to enter a room 58 is given to each user, and each of the rooms A and B···and the executive room. In Fig., ○ means having use authority, and × means not having use authority. For example, "Taro Suzuki" of a user ID "000001" has a password, xxxxx. He has authority to use the rooms A and B and the meeting room, but does not have authority to use the executive room.

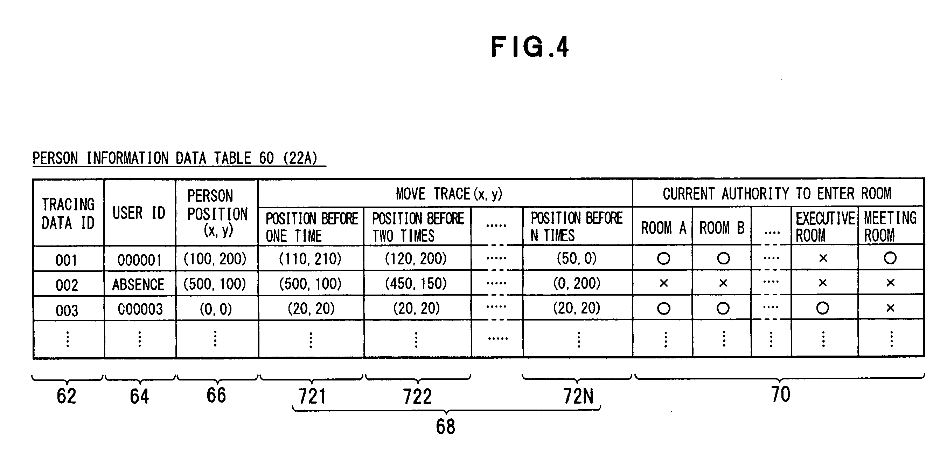

The person information database 22A is described with reference to Fig. 4. Fig. 4 depicts a person information data table. The structure depicted in Fig. 4 is one example and the present invention is not limited to such structure.

For the person information database 22A (Fig. 1), a person information data table 60 (Fig. 4) is set. As monitored areas in this case, the room A, the room B···the executive room and the meeting room are set. For this person information data table 60, as depicted in Fig. 4, tracing data ID 62, user ID 64, a person position (x, y) 66, a move trace (x, y) 68 and a current authority to enter a room 70 are set. The tracing data ID 62 is identification information of tracing data, and is set for every user ID. The person position 66 represents position information of an x, y coordinate set in monitored areas. The move trace 68 is information representing a move trace of a user every predetermined time, and represents a move trace from position information of an x, y coordinate set in monitored areas as well as the person position (x, y) 66. Since a move trace thereof represents a change of a position every time, a position before one time 721, a position before two times 722...a position before N times 72N are set for the move trace 68 in this embodiment. The current authority to enter a room 70 is set for every monitored area, that is, for the above described rooms A and B···executive room and meeting room respectively.

According to this person information data table 60, for example, a person position of tracing data ID "001" and user ID "000001" moves to a coordinate position of a move trace. A current authority to enter a room is such that the rooms A and B and the meeting room can be used, but the executive room cannot be used.

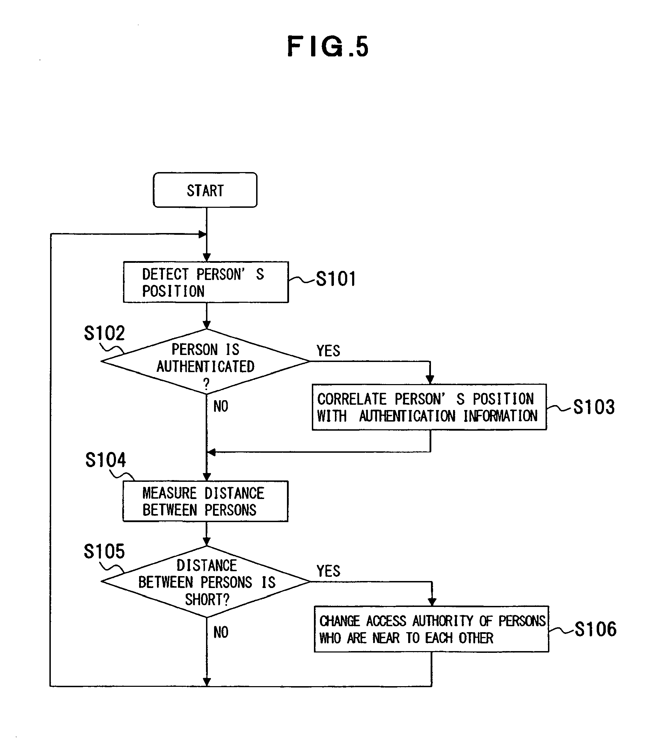

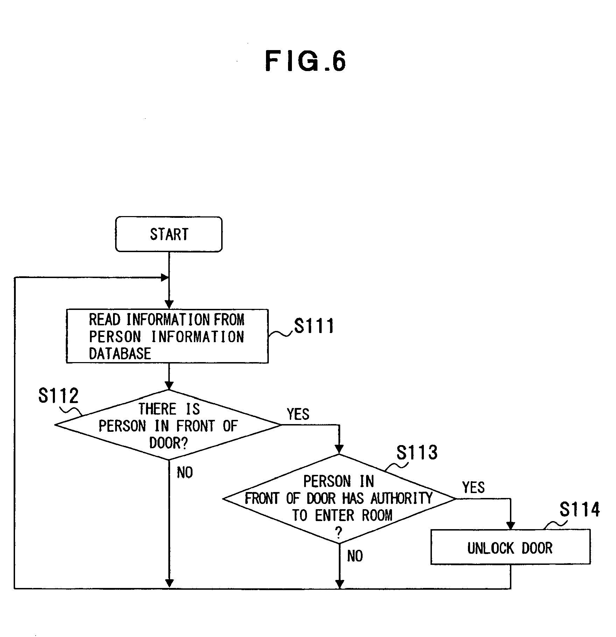

Managing a user's state and management process of a user's state are described with reference to Figs. 5 and 6. Fig. 5 is a flowchart depicting processing procedure of a management process of a user's state according to the first embodiment and Fig. 6 is a flowchart depicting processing procedure of a control process of opening and closing a door. The structure depicted in Figs. 5 and 6 is one example, and the present invention is not limited to such structure.

In this security system 2A (Fig. 1), a process of managing a user's state and a process of executing control of opening and closing a door are carried out simultaneously. The above processing procedure is one example of a security method and a security program, and includes a process executing control of locking and unlocking a door along with management of a user's state.

In processing procedure of a management process of a user's state, as depicted in Fig. 5, a person's position is detected (step S101), whether the person is authenticated or not is determined (step S102), a person's position and authentication information are correlated (step S103), a distance between persons is measured (step S104), the distance between the persons is short or not is determined (step S105), if the distance between the persons is short, access authority of persons who are near to each other is changed (step S106) and the procedure returns to step S101. If the distance between the persons is not short, the procedure returns to step S101, the person is monitored, and the processes of steps S102-S106 are carried out.

In step S101, a position of a person who is always within a monitored range is grasped by the person position detection and tracing unit 26 based on an image obtained from the imaging devices 12A and 12B (Fig. 1). In this embodiment, the imaging devices 12A and 12B are disposed at every place such as a room and a corridor. Thus, a person is traced continuously wherever the person is. A method for tracing a person is, for example, a person's position is recognized by using a plurality of the imaging devices 12A and 12B, and may use a back projection method and a Kalman filter (for example, Document 1: HAYASAKA Mitsuharu, TOMINAGA Hideyoshi and KOMIYA Kazumi, "Multiple Object Tracking Using Back Projection Method and Kalman Filter", PRMU 2001-132, pp. 133-138, Nov., 2001.). As a method using a laser beam, person' s feet may be measured by using a multiple single-row laser range scanners (for example, Document 2: NAKAMURA Katsuyuki, "Tracking Pedestrian using Multiple Single-row Laser Range Scanners and Its Reliability Evaluation", Densi Jyoho Tusin Gakkai Ronbunsi D-II, vol. J88-D-II, no.7, pp. 1143-1152, Jul., 2005). As disclosed in Document 2, a person position is stored into the person information database 22A by obtained tracing data ID at any time. Since it is not known who a person detected for the first time is, initialization may be executed so as not to have all of user ID and authority to enter a room.

In step S102, when a user enters a room, authentication is executed by the authentication apparatus 6. Concretely, by a method displaying a dialog for user authentication on a display to execute authentication using a user and a password and an authentication method utilizing an authentication apparatus using veins and fingerprints, the authentication unit 24 checks input authentication information inputted from the authentication apparatus 6 with registered information in the authentication information database 20A to specify an individual. If authentication is not executed because there is no registration in the authentication information database 20A in advance, etc., the procedure transmits to step S104.

In step S103, when authentication is executed (step S102), person authentication information and a person are correlated from a positional relationship between a person position stored in the person information database 22A and a place where authentication is executed. Concretely, a position of the authentication apparatus 6 and authentication apparatus ID which the authentication apparatus 6 has are correlated in advance, user ID determined by authentication is registered to a user of tracing data ID who is at the nearest position to a place of the authentication apparatus 6 where the authentication is executed. At the same time, since authority to enter a room corresponding to a user is also known, authority to enter a room in the person information database 22A is updated based on the authority to enter a room corresponding to the user.

In step S104, a positional relationship is calculated by using a position of each person. If a state where a distance between persons is equal to or below a predetermined distance is detected (step S105), the procedure transmits to step S106.

In step S106, authority to enter a room of each user who is within a predetermined distance of a distance between persons is read out from the person information database 22A. With using the read out authority to enter a room, the authority to enter a room of each user is changed. Concretely, a logical AND (conjunction) of the authority to enter a room that each user currently has is calculated to be rendered the authority to enter a room of each user.

Through step S105 or step S106, the procedure returns to step S101, and the above described processes are repeated.

In the processing procedure of controlling opening and closing a door, as depicted in Fig. 6, information is read from the person information database 22A, (step S111), whether there is a person in front of a door or not is determined (step S112), if there is a person in front of the door, whether the person has authority to enter a room is determined (step S113) and if the person has authority to enter a room, the door is unlocked (step S114).

In this case, in step S111, the person information database 22A is accessed, and a person position, user ID, authority to enter a room, etc. are read out. In step S112, whether there is a person on the periphery of each door is confirmed by using the person position. If there is a person on the periphery of each door, the procedure transmits to step S113. In step S113, if the person on the periphery of the door has authority to enter a room of this door, the door is unlocked. After the door is unlocked, the above described processes are repeated.

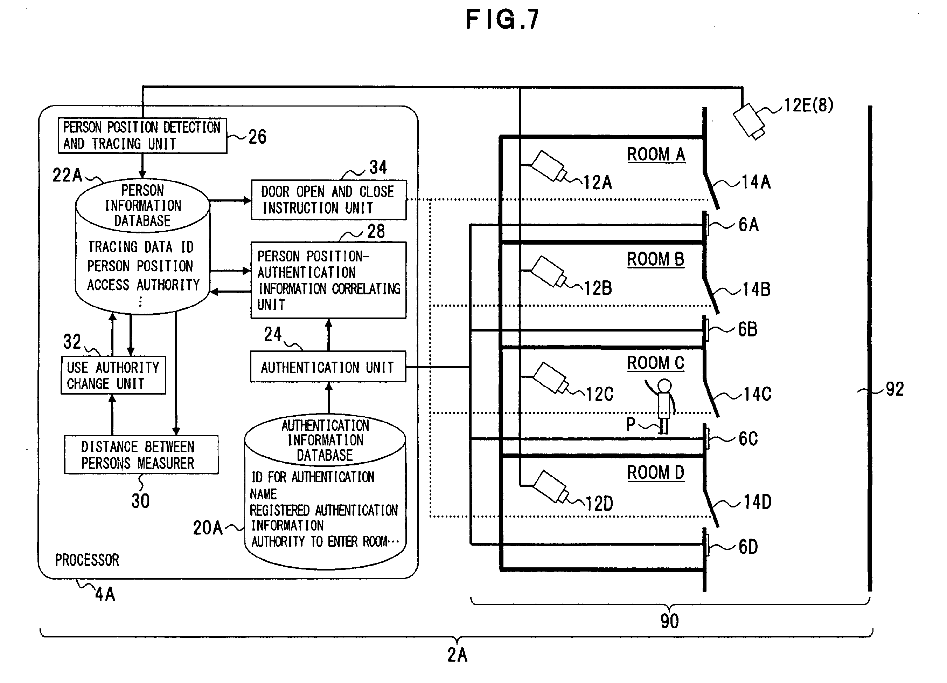

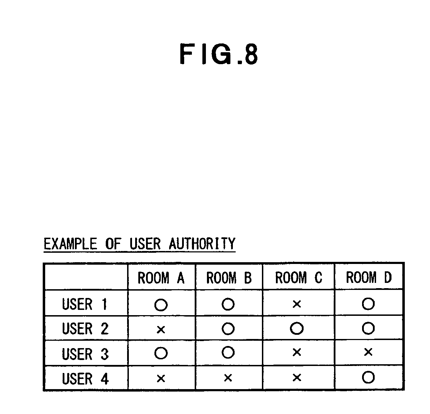

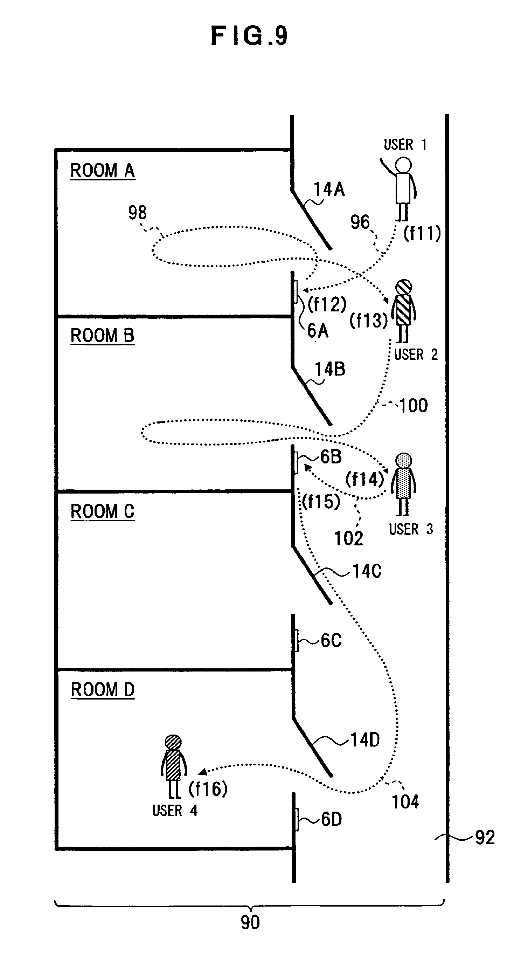

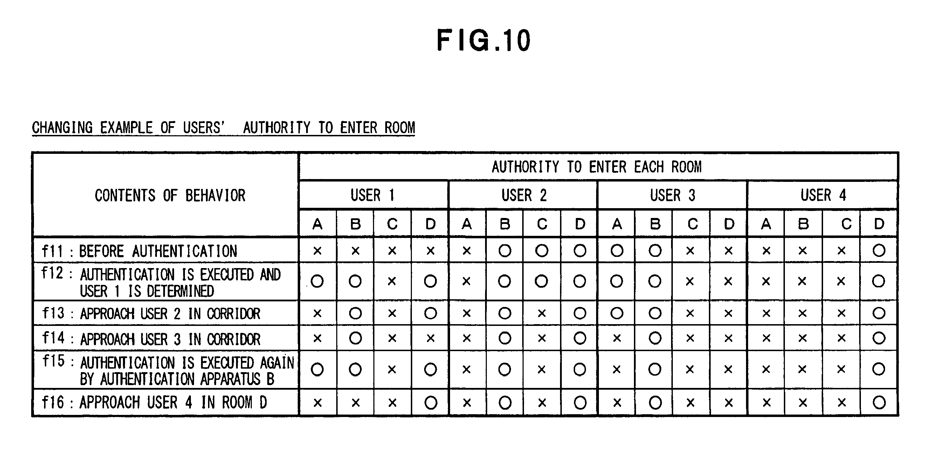

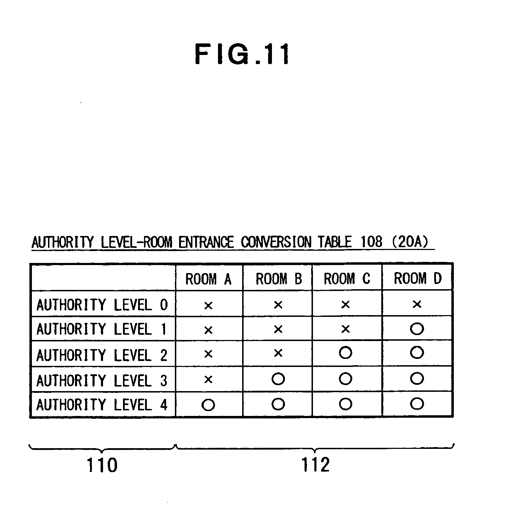

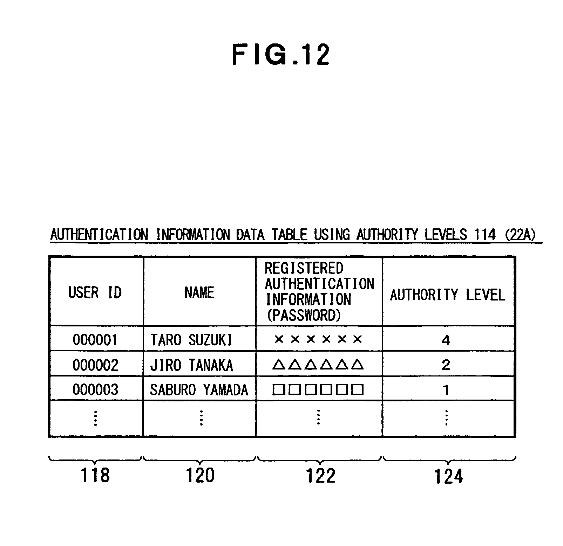

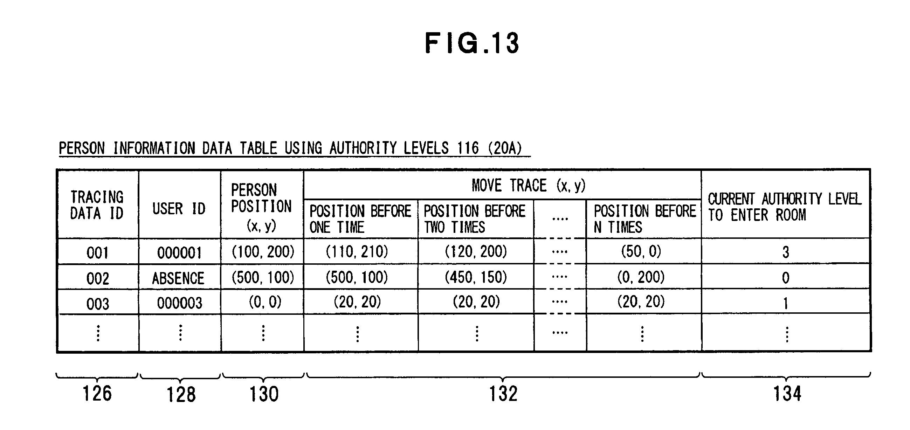

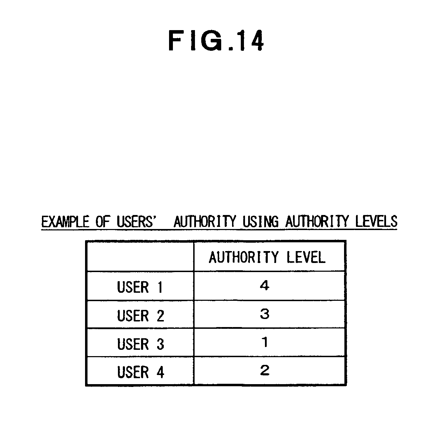

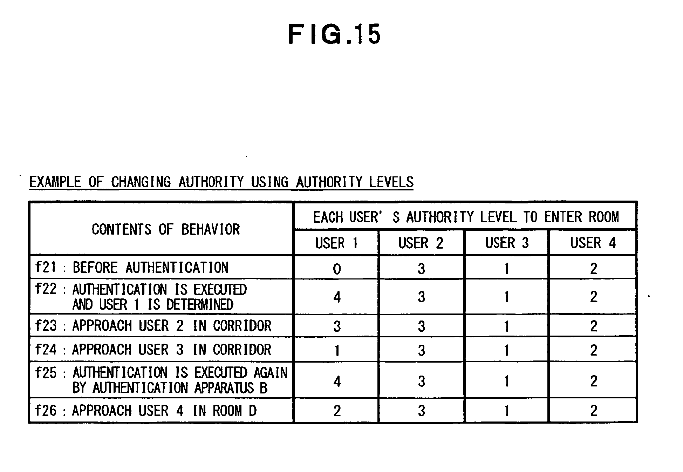

A concrete example of the security system 2A according to the first embodiment is described with reference to Figs. 7, 8, 9, 10, 11, 12, 13, 14 and 15. Fig. 7 depicts an example of a security system, Fig. 8 depicts an example of users' authority, Fig. 9 depicts an example of move paths of users, Fig. 10 depicts an example of changing users' authority to enter a room, Fig. 11 depicts an authority level-room entrance conversion table, Fig. 12 depicts an authentication information data table using authority levels, Fig. 13 depicts a personal information data table using authority levels, Fig. 14 depicts an example of users' authority using authority levels and Fig. 15 depicts an example of changing authority using authority levels. Figs. 7 to 15 are one example, and the present invention is not limited to such structure. In Figs. 7 and 9, the same components as Fig. 1 are denoted by the same reference numerals.

This example is a case where the above described security system 2A is used for an environment such as a plurality of rooms that a plurality of users use. The example depicts a changing example of authority to enter a room that changes according to a distance between users.

The rooms A, B, C and D are disposed as monitored areas in a building 90 as an environment where the security system 2A is disposed as depicted in Fig. 7. A corridor 92 is disposed as a path for being through each room. A door 14 A and an authentication apparatus 6A are disposed at an entrance of the room A, a door 14 B and an authentication apparatus 6B are disposed at an entrance of the room B, a door 14 C and an authentication apparatus 6C are disposed at an entrance of the room C, and a door 14 D and an authentication apparatus 6D are disposed at an entrance of the room D. For unlocking each door 14A, 14B, 14C and 14D, it is necessary for a user to execute authentication of a room where the user tries to enter by the authentication apparatuses 6A, 6B, 6C and 6D, and to obtain authority to enter a room. In this case, a system is structured such that if authentication is executed when the door 14A is unlocked, the door 14B can be unlocked without executing authentication again.

Users 1, 2, 3 and 4 are assumed to have authority to use each room A, B, C and D (Fig. 8). In this case, concerning use authority of a user, as depicted in Fig. 8, the user 1 has authority to enter the rooms A, B and D, the user 2 has authority to enter the rooms B, C and D, the user 3 has authority to enter the rooms A and B and the user 4 has authority to enter only the room D.

Supposing that these users 1, 2, 3 and 4 move as depicted in Fig. 9. In Fig. 9, the user 1 moves through move paths 96, 98, 100, 102 and 104.

The move and use authority of the user 1 are changed as depicted in Fig. 10. That is, at a time point when the user 1 enters the corridor 92, it is not known who a user is since authentication is not executed. That is, tracing data ID and a current position are newly added to the person information database 22A by arrival (discovery) of a new person, however, user ID corresponding thereto is "absence", and authority to enter a room is all "absence" (f11 of Fig. 10). Here, to simplify the description, authentication has been already executed for the users 2, 3 and 4.

At a time point when the user 1 is authenticated and determined to be the user 1, in the person information database 22A, user ID is set to "user 1", authority to enter the rooms A, B and D which the user 1 has is rendered presence, that is, authority is rendered "○", to give this person authority to enter the rooms A, B and D (f12 of Fig. 10).

It is possible that the user 2 is recognized as the user 1 if the user 1 approaches the user 2 on the way to moving to the room B through the corridor 92 from the room A after the user 1 works in the room A. Then, the user 1 loses authority to enter the room A that an approached person (user 2) does not have, that is, use authority is changed, and the user 2 loses authority to enter the room C that an approaching person (user 1) does not have. I. e., use authority is also changed concerning the user 2. In short, the authority of both is changed to authority to enter only the rooms B and D that is calculated from a logical AND (conjunction) of the authority of both (f13 of Fig. 10). In this case, in the person information database 22A, authority of the user 1 to use the room A and authority of the user 2 to use the room C are rewritten to "×". Since the user 2 has authority to enter the room B, the user 2 can enter the room B without authentication. Afterward, when the user 1 approaches the user 3, authority which each user currently has is compared, similarly. The user 1 loses authority to enter the room D where the user 3 cannot enter, and the user 3 loses authority to enter the room A where the user 1 cannot enter. In the person information database 22A, authority of the user 1 to use the room D and authority of the user 3 to enter the room A are rendered to "×" as well as the previous case (f14 of Fig. 10). If authority to enter a room is lost, authority to enter a room that is originally given to the user 1 is given again at a time point when authentication is executed again (re-authentication), and it is confirmed who a person is (f15 of Fig. 10). In a room as well, when the user 1 approaches the user 4 in a room, both users result in having authority to enter only the room D that is a logical AND calculated from both users' authority (f16 of Fig. 10).

If an authority level-room entrance conversion table 108 (Fig. 11) where a relationship between an authority level and authority to enter a room is prescribed in advance without deciding presence or not of authority to enter each room is used, an effect is the same as the above description if a use authority level is set for each user. In this authority level-room entrance conversion table 108, as depicted in Fig. 11, authority to enter each room 112 is set for an authority level 110. Five authority levels "0" to "4" are set for the authority level 110. The authority level "0" means that there is no authority to enter all the rooms A to D. The authority level "1" means that there is authority to enter only the room D. The authority level "2" means that there is authority to enter the rooms C and D. The authority level "3" means that there is authority to enter the rooms B, C and D. The authority level "4" means that there is authority to enter all the rooms A, B, C and D.

In this case, an authentication information data table 114 (Fig. 12) and a person information data table 116 (Fig. 13) are used. In this authentication information data table 114, as depicted in Fig. 12, information such as user ID 118 managing authentication information of a user, a name 120 of a registered person, registered authentication information 122 determining whether to be an original or not compared with authentication information and an authority level to enter a room 124 which the person has is registered. In the person information data table 116, as depicted in Fig. 13, tracing data ID 126 managing tracing data, user ID 128 representing whose tracing data is, a person position 130, a move trace 132, a current authority level to enter a room 134, etc. are registered for each person.

An example of changing authority to enter a room when such authority level is used under the above described environment (Fig. 9) is described. It is assumed that each user has a different authority level as depicted in Fig. 14.

A move and use authority of the user 1 changes as depicted in Fig. 15. That is, it is not known who enters the corridor 92 since authentication is not executed when the user 1 enters the corridor 92. Therefore, tracing data ID and a current position are newly added to the person information database 22A by arrival (discovery) of a new person, however, user ID corresponding thereto is "absence", and an authority level to enter a room is "0" (f21). Here, to simplify the description, authentication has been already executed for the users 2, 3 and 4.

As depicted in Fig. 15, when the user 1 is determined to be the user 1 by executing authentication, in the person information database 22A, user ID is set to "user 1", and an authority level to enter a room "4" that the user 1 has is given (f22). Whether to enable entering the room A is determined with reference to the authority level-room entrance conversion table 108 (Fig. 11).

It is possible that the user 2 is recognized as the user 1 if the user 1 approaches the user 2 on the way to moving to the room B after the user 1 works in the room A. Then, levels of the users 1 and 2 are set to a lower level out of the levels thereof (f23). Since the level of the user 2 is lower, in the person information database 22A, authority level of the user 1 to enter a room is rewritten to "3". However, since the level of the user 1 to enter a room is "3" and the user 1 has authority to enter the room B, the user 1 can enter the room B without authentication. Afterward, when the user 1 approaches the user 3, authority to enter a room that each user currently has is compared similarly, and levels of the users 1 and 3 are set to a lower level out of the levels thereof. In this case, in the person information database 22A, authority level of the user 1 to enter a room is set to "1" as well as the previous case (f24). If authority to enter a room is lost, authority which is originally given to the user 1 is given again at a time point when authentication is executed again, and it is confirmed who a person is. Thus, an authority level to enter a room "4" can be obtained again in this case (f25). When the user 1 approaches the user 4 in a room, authority levels of users are set to a lower level out of the levels thereof, similarly (f26).

According to the first embodiment, when a user approaches another user who has lower authority than the user and it does not determined which user has authority after the user is authenticated, the authority are lowered. Thus, the security system 2A does not erroneously permit another user who does not have use authority to enter a room, to prevent lowering of security. Other features and advantages of the first embodiment are listed as follows.
(1) Erroneous service provision for a person who does not have access authority can be prevented, and access authority can be controlled.
(2) A system can be structured such that the use authority is added to a user and service can be provided for the user without authentication every time, and illicit use that service is provided for a person who does not have the use authority can be prevented by changing the use authority of a user according to distance between users.
(3) By correlating a person's position with use authority based on tracing of a user, a system that once authentication is executed, service can be provided without authentication every time can be structured, and illicit use that service is provided for a person who does not have use authority can be prevented.
(4) With including a system detecting and tracing a person's position and a system authenticating a person, a system that the authority for receiving service (use authority) is given by authentication procedure can be configured, and if a distance between persons becomes a predetermined value or under this value, use authority of each person can be changed according to use authority states of both users.
(5) A function that use authority of a person is set in incremental levels, and if a distance between persons becomes a predetermined value or under this value, each level of use authority is set to a lower level out of levels of the persons can maintain a security level without requesting authentication repeatedly.
(6) A user tracing means (unit) that traces an authenticated user is included. A use authority control means (unit) is configured to maintain user's use authority or changed use authority based on tracing of the user tracing means (unit). Thus, convenience can be enhanced without requesting authentication repeatedly.
(7) Since a function that use authority of a person is set by service, and if a distance between persons becomes a predetermined value or under this value, use authority of each person is changed to use authority calculated from a logical AND by service is included, a security level can be set by service to enhance convenience.
(8) If a function that each person is deprived of one's use authority when a distance between persons becomes a predetermined value or under this value is included, a high security level can be maintained.
(9) When use authority is changed, executing authentication again in an authentication system can restore the changed use authority to the use authority that a person originally had. Thus, while a security level is maintained, convenience can be enhanced.
(10) If use authority which a user currently has is displayed on the display 45, a user can confirm one's own use authority, and an administrator can know a relationship between use authority and a user through display information easily.
(11) In systems detecting a person's position, authenticating a person and giving use authority by authentication procedure, if a state where a distance between an authenticated person and a person on the periphery of the authenticated person is within a predetermined value when authentication is executed is detected, the structure that use authority is not given to the authenticated person can be made. Such structure can enhance a security level more.
(12) If use authority is not given if a state where a distance between an authenticated person and a person on the periphery of the authenticated person is within a predetermined value when authentication is executed is detected, lowering a security level by acceptance of another person can be caught.

### Second Embodiment

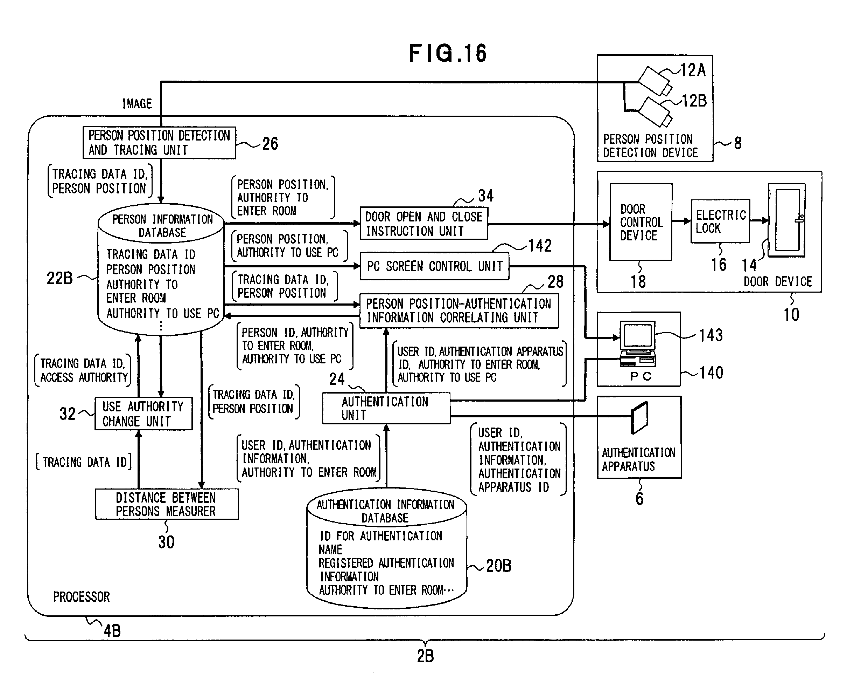

A second embodiment is described with reference to Fig. 16. Fig. 16 depicts a security system according to the second embodiment. The structure depicted in Fig. 16 is one example and the present invention is not limited to such structure. In Fig. 16, the same components as Fig. 1 are denoted by the same reference numerals.

This security system 2B (Fig. 16) configures a system that login control for a personal computer (PC) is added to the security system 2A of the first embodiment.

This security system 2B includes, as depicted in Fig. 16, a processor 4B, the authentication apparatus 6, the person position detection device 8, the door device 10 and a PC 140. The processor 4B is a control means (unit) to control use authority based on authentication, and detection and tracing of a person. Concretely, the processor 4B makes the authentication apparatus 6 perform authentication, makes the person position detection device 8 detect and trace a person position, makes the door device 10 lock or unlock on the basis of these authentication and tracing of a person, and log in control to the PC 140, etc. Since the authentication apparatus 6, the person position detection device 8 and the door device 10 are the same as the first embodiment, the same components are denoted by the same reference numerals, and descriptions thereof are omitted.

The processor 4B includes an authentication information database 20B, a person information database 22B, the authentication unit 24, the person position detection and tracing unit 26, the person position-authentication information correlating unit 28, the distance between persons measurer 30, the use authority change unit 32, the door open and close instruction unit 34 and a PC display control unit 142 as a control means (unit) controlling use authority based on authentication, and detection and tracing of a person, controlling display of the PC 140, etc.

The authentication information database 20B is a database where information for executing a user authentication process such as user ID managing authentication information of a user, a name of a registered person, registered authentication information determining whether to be an original person compared with authentication information and authority to enter a room to represent a door through which the registered person can be enter as well as the first embodiment. This authentication information database 20B stores information representing ID for authentication, a name, registered authentication information, authority to enter a room, etc.

The person information database 22B is a database where information such as tracing data ID managing tracing data, user ID representing whose the tracing data is, authority to enter a room to represent a door which can be currently unlocked, authority to use a PC, etc. is registered for each person.

The authentication unit 24 is an authentication means (unit) executing authentication for a user based on input authentication information such as biometrics information inputted into the authentication apparatus 6 and registered authentication information in the authentication information database 20B. The authentication unit 24 checks input authentication information such as user ID, authentication information and authentication apparatus ID inputted from the authentication apparatus 6, with registered information such as user ID, authentication information and authority to enter a room in the authentication information database 20B. As a result of authentication thereof, the user ID, the authentication information, the authority to enter a room, the authority to use a PC, etc. are outputted to be provided for the person position-authentication information correlating unit 28.

The person position detection and tracing unit 26 is one example of a position detection means (unit) detecting at least one of a user' s position and move as well as the first embodiment. The person position detection and tracing unit 26 detects a person from an image obtained by the imaging devices 12A and 12B, detects a position of a person, and traces a move thereof to generate person information (user information) such as tracing data ID and a person position. This person information is stored into the person information database 22B.

The person position-authentication information correlating unit 28 is a means (unit) correlating authentication information with a person position to give access authority to a user as use authority as well as the first embodiment. In this person position-authentication information correlating unit 28, tracing data ID, person ID, authority to enter a room and authority to use a PC are correlated with tracing data ID and a person position in the person information database 22B.

The distance between persons measurer 30, the use authority change unit 32, and the door open and close instruction unit 34 are the same as the first embodiment.

The PC display control unit 142 is given information about authority to use a PC, set for a user, from the person information database 22B correspondingly to a person position, and outputs a control signal based thereon. This control signal is a control signal of permitting or prohibiting logging in to the PC 140.

A hardware configuration of the processor 4B is the same as the hardware configuration depicted in Fig. 2. The hardware configuration of the processor 4B is the same as that of the processor 4A other than the PC display control unit 142 being configured by executing a security program by the central processor 36 and a RAM. To the processor 4B, the authentication apparatus 6 for executing authentication, one or a plurality of the imaging devices 12A and 12B for grasping a person position in a monitored range, the door control device 18 for controlling unlocking and locking a door by a control signal and the PC 140 that can change a logging in state by a control signal are connected. An object by which a person's position can be known such as a laser sensor and an RFID reader can be substituted for these imaging devices 12A and 12B.

In this embodiment, control of authority to enter a room and control of logging in to the PC 140 are executed by the person position detection and tracing unit 26 detecting and tracing a person from an image obtained by the imaging devices 12A and 12B, the authentication unit 24 executing authentication based on the authentication information database 20B, the person position-authentication information correlation unit 28 correlating authentication information and a personal position to give access authority, the distance between persons measurer 30 reading out a position of a person from the person information database 22B to measure a distance between each person, the use authority change unit 32 changing use authority of each person according to a distance therebetween, the door open and close instruction unit 34 instructing opening and closing a door from a person's position and access authority thereof, and the PC display control unit 142 executing booting a PC screen from a person's position and the access authority thereof.

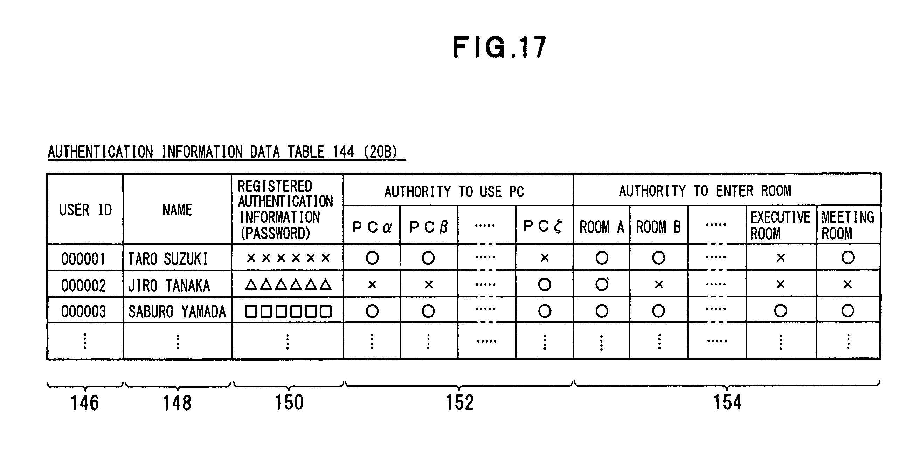

The authentication information database 20B is described with reference to Fig. 17. Fig. 17 depicts an authentication information data table. The structure depicted in Fig. 17 is one example and the present invention is not limited to such structure.

The authentication information database 20B (Fig. 16) is a database where information for executing a user authentication process such as user ID managing authentication information of a user, a name of a registered person, registered authentication information determining whether to be an original person compared with authentication information, authority to enter a room to represent a door through which the registered person can be enter, authority to use a PC which can be logged in to is registered. For this authentication information database 20B, an authentication information data table 144 (Fig. 17) is set. In this case, rooms A, B...an executive room and a meeting room are set as monitored areas.

For this authentication information data table 144, as depicted in Fig. 17, user ID 146, a name 148, registered authentication information 150, authority to use a PC 152 and authority to enter a room 154 are set. For the user ID 146, the name 148 of a user and, for example, a password as the registered authentication information 150 are set. The authority to use a PC 152 and the authority to enter a room 154 are given to each user, and each of the rooms A and B··· and the executive room. In this case, a plurality of PCs α , β··· and ζ are set as the PC 140. In Fig. , ○ means having use authority, and × means not having use authority. For example, "Taro Suzuki" of a user ID "000001" has a password, xxxxx. He has authority to use the PCs α and β, the rooms A and B and the meeting room, but does not have authority to use the PC ζ and the executive room.

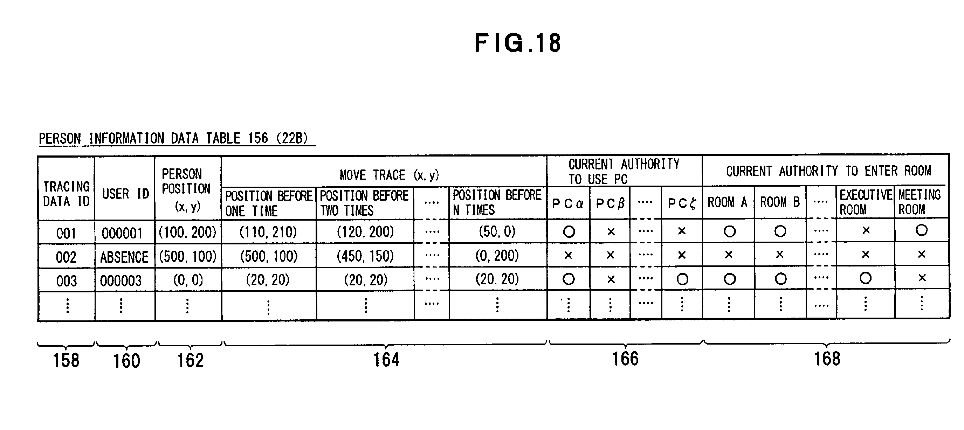

The person information database 22B (Fig. 16) is a database representing a current status of each person such as tracing data ID managing tracing data, user ID representing whose the tracing data is, authority to enter a room to represent a door which can be currently unlocked, authority to use a PC where can be currently logged in, a current position of a person, a move trace. For the person information database 22B (Fig. 16), a person information data table 156 (Fig. 18) is set.

For this person information data table 156, as depicted in Fig. 18, tracing data ID 158, user ID 160, a person position (x, y) 162, a move trace (x, y) 164, a current authority to use a PC 166 and a current authority to enter a room 168 are set. The tracing data ID 158 is identification information of tracing data, and is set for every user ID. The person position 162 represents position information of an x, y coordinate set in monitored areas. The move trace 164 is information representing a move trace of a user every predetermined time, and represents a move trace from position information of an x, y coordinate set in monitored areas as well as the person position 162. Since move trace thereof represents a change of a position every time, a position before one time, a position before two times...a position before N times are set for the move trace 164. To the current authority to use a PC 166, use authority of logging in to a PC is set. The current authority to enter a room 168 is set for every monitored area, that is, for the above described rooms A and B···executive room and meeting room respectively.

According to this person information data table 156, for example, a person position of tracing data ID "001" and user ID "000001" moves to a coordinate position of a move trace (x, y). Current authority to use a PC is set to the PC α . Current authority to enter a room is such that the rooms A and B and the meeting room can be used, but the executive room cannot be used.

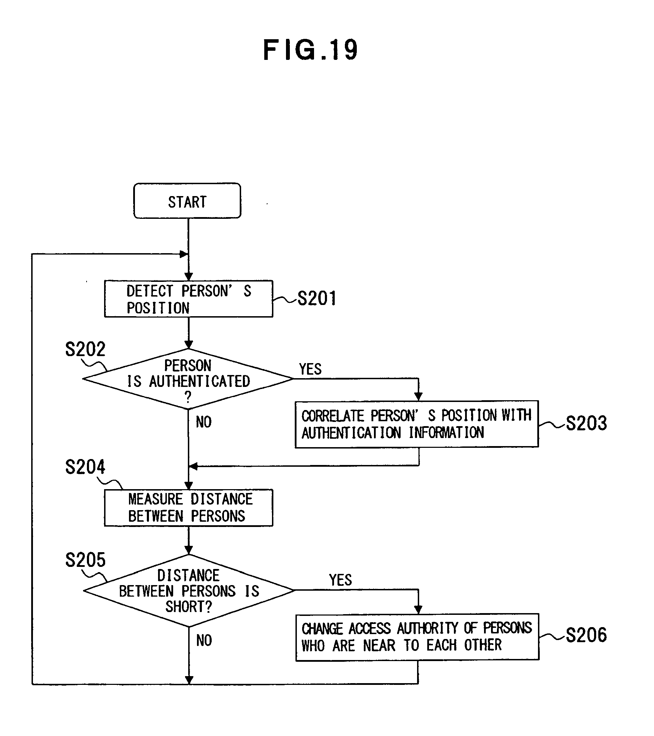

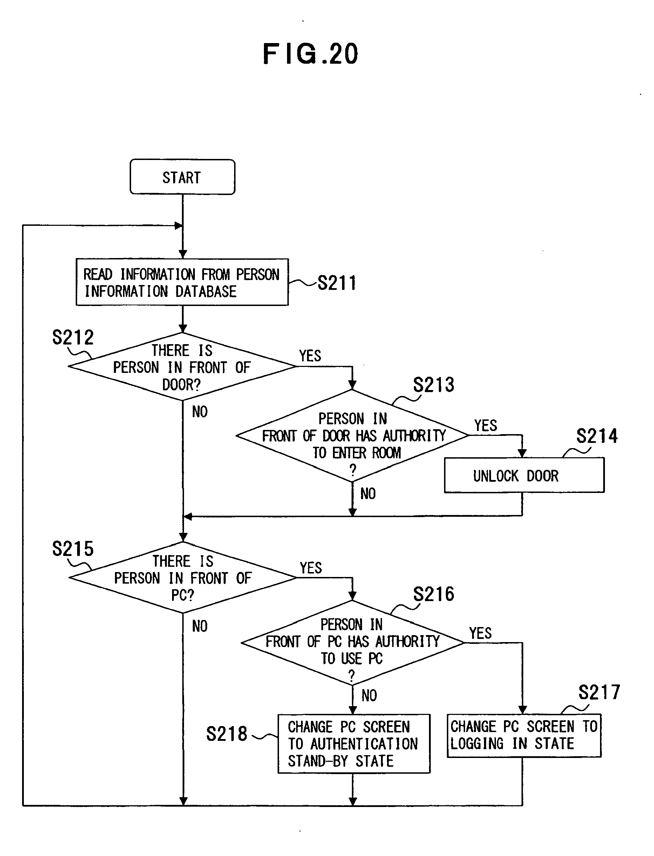

A management process of a user's state and a control process opening and closing a door, and logging in to a PC are described with reference to Figs. 19 and 20. Fig. 19 is a flowchart depicting processing procedure of a management process of a user's state according to the second embodiment and Fig. 20 is a flowchart depicting processing procedure of a control process of opening and closing a door and a control process of logging in to a PC. The structure depicted in Figs. 19 and 20 is one example, and the present invention is not limited to such structure.

In this security system 2B (Fig. 16), a process of managing a user's state, a process of controlling a door and a process of authority to use a PC are carried out. Processing procedure thereof is one example of a security method and a security program, and includes processes of managing user's state, managing locking and unlocking a door, and controlling logging in to a PC.

In processing procedure of a management process of a user's state, as depicted in Fig. 19, a person's position is detected (step S201), whether the person is authenticated or not is determined (step S202), if the person is authenticated, a person's position and authentication information are correlated (step S203), a distance between persons is measured (step S204), the distance between the persons is short or not is determined (step S205), if the distance between the persons is short, access authority of persons who are near to each other is changed (step S206) and the procedure returns to step S201. If the distance between the persons is not short, the procedure returns to step S201, the person is monitored, and the processes of steps S202-S206 are carried out.

In the processing procedure of this state management process, in step S201, a position of a person who is always within a monitored range is grasped by the person position detection and tracing unit 26 based on an image obtained by the imaging devices 12A and 12B. In this embodiment, the imaging devices 12A and 12B are disposed at every place of the monitored areas such as a room and a corridor. Thus, a person is traced continuously wherever the person is. Concerning a method for tracing a person, for example, there is a method using a back projection method and a Kalman filter as a method for recognizing a person's position by using a plurality of cameras (for example, Document 1: HAYASAKA Mitsuharu, TOMINAGA Hideyoshi and KOMIYA Kazumi, "Multiple Object Tracking Using Back Projection Method and Kalman Filter", PRMU 2001-132, pp. 133-138, Nov., 2001.). As a method using a laser beam, there is a method that person's feet is measured by using a multiple single-row laser range scanners (for example, Document 2: NAKAMURA Katsuyuki, "Tracking Pedestrian using Multiple Single-row Laser Range Scanners and Its Reliability Evaluation", Denshi Jyoho Tushin Gakkai Ronbunshi D-II, vol. J88-D-II, no.7, pp. 1143-1152, Jul., 2005).

A person position is stored into the person information database 22B by obtained tracing data ID at any time. Since it is not known who a person detected for the first time is, initialization is executed so as not to have all of user ID and authority to enter a room.

In step S202, when a user enters a room or logs in to the PC 140, authentication is executed. Concretely, by a method displaying a dialog for user authentication on a display 143 of the PC 140 to execute authentication using a user and a password and an authentication method utilizing an authentication apparatus using veins and fingerprints, check with the authentication information database 20B is performed to specify an individual. If authentication is not executed because there is no registration in the authentication information database 20B in advance, etc., the procedure transmits to step S204.

In step S203, when authentication of step S202 is executed, person authentication information and a person are correlated from a positional relationship between a person position stored in the person information database 22B and a place where authentication is executed. Concretely, a position of an authentication apparatus and authentication apparatus ID are correlated in advance, user ID determined by authentication is registered to a user of tracing data ID who is at the nearest position to a place of the authentication apparatus where the authentication is executed. At the same time, since authority to enter a room and authority to use the PC 140 corresponding to the user are known, use authority in the person information database 22B is also updated.

In step S204, a positional relationship is calculated by using a position of each person. If a state where a distance between persons is equal to or below a predetermined distance is detected (YES of step S205), the procedure transmits to step S206.

In step S206, authority to enter a room and authority to use the PC 140 of each user who is within a predetermined distance of a distance between persons are read out from the person information database 22B. With using the read out authority to enter a room and to use the PC 140, use authority of each user is changed. Concretely, a logical AND of the authority which each user currently has is calculated to be rendered the use authority of each user.

Through step S205 or step S206, the procedure returns to step S201, and the above described processes are repeated.

In the processing procedure of control processes of opening and closing a door and logging in to a PC, as depicted in Fig. 20, the person information database 22B is accessed, a person position, user ID, authority to enter a room, authority to use a PC, etc. are read out (step S211), and whether there is a person on the periphery of each door or not is confirmed by using a person position (step S212). If there is a person on the periphery of each door (YES of step S212), whether the person on the periphery of each door has authority to enter a room through a door is determined (step S213) and if the person has authority to enter a room (YES of step S213), the door is unlocked (step S214) and the procedure transmits to step S215. If there is not a person on the periphery of each door (NO of step S212) and the person does not have authority to enter a room (NO of step S213), the procedure also transmits to step S215.

In step S215, whether there is a person on the periphery of a PC is confirmed by using a person position. If there is a person on the periphery of the PC (YES of step S215), whether the person on the periphery of a door has authority to use the PC is determined (step S216). If the person on the periphery of the door has authority to use the PC, (YES of step S216), a PC screen is changed to a logging in state (step S217), and logging in is automatically carried out. If the person on the periphery of the door does not have authority to use the PC, (NO of step S216), the PC screen is changed to an authentication stand-by state (step S218).

After a process of step S217 or step S218, the procedure returns to step S201 to repeat the above described processes.

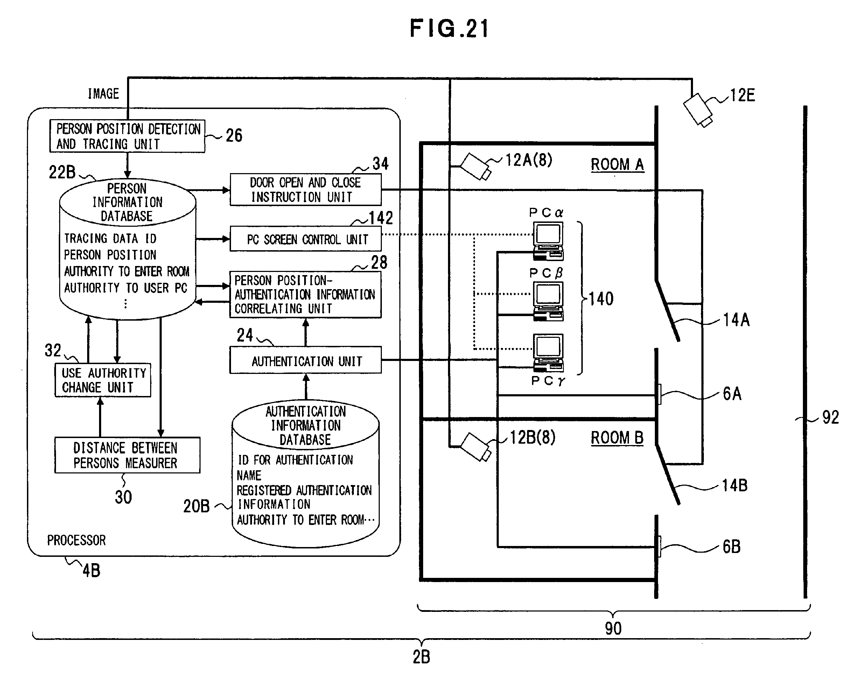

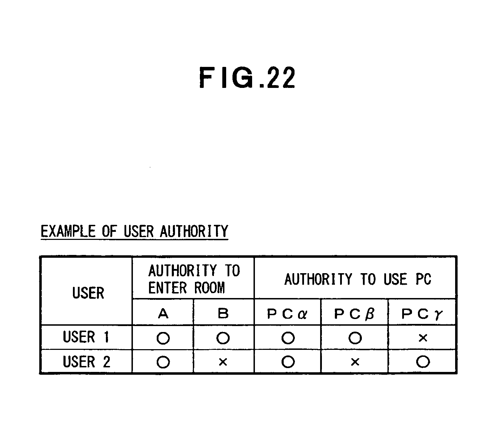

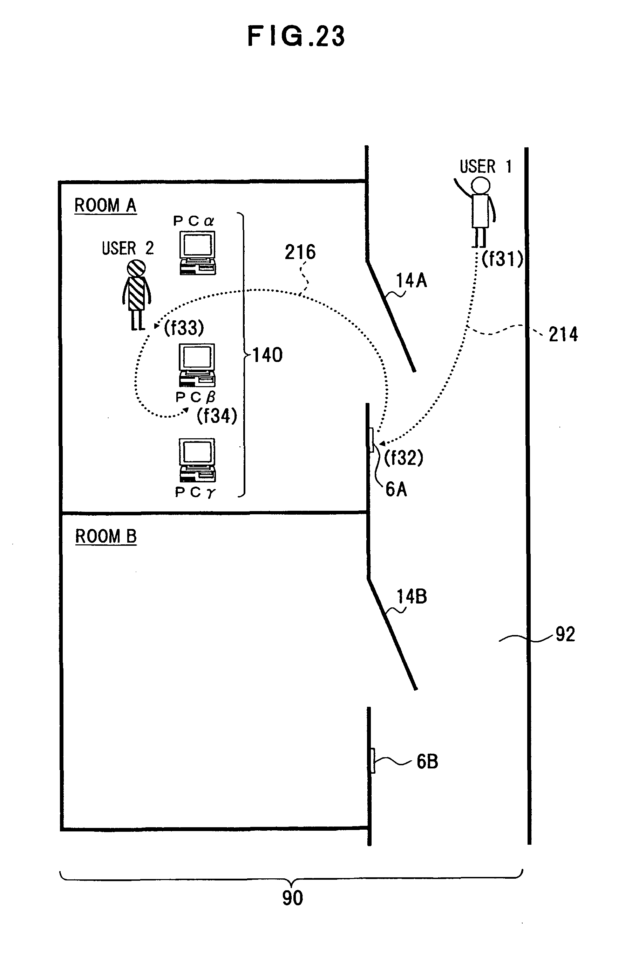

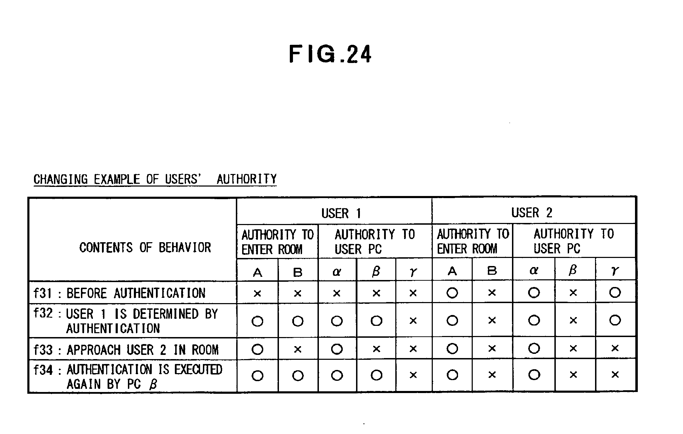

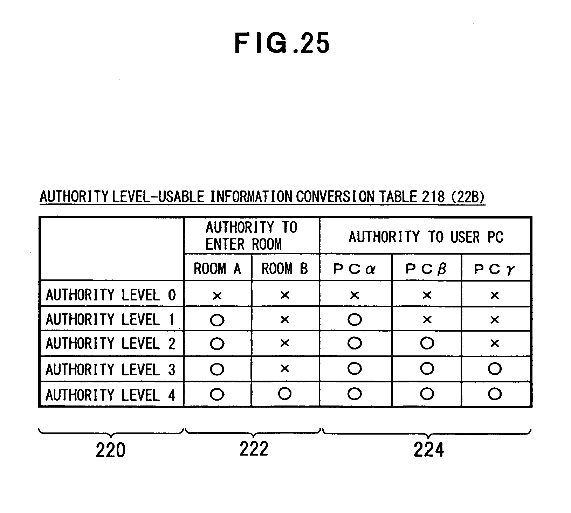

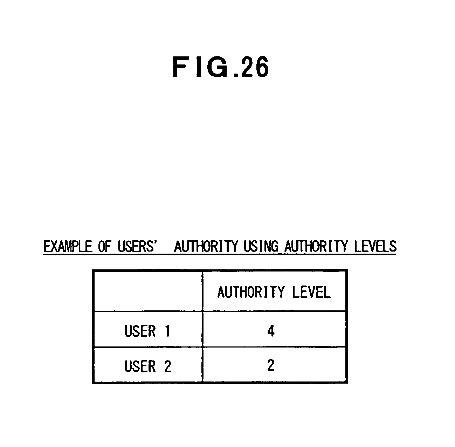

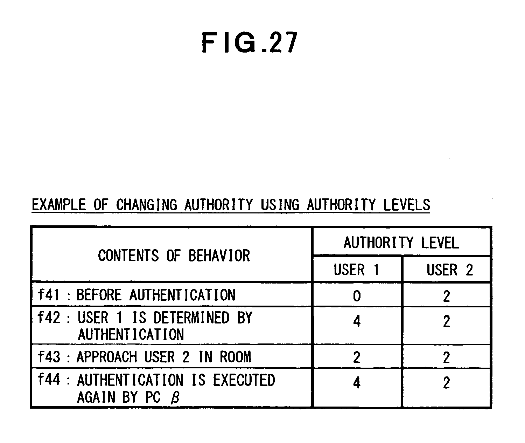

A concrete example of the security system 2B according to the second embodiment is described with reference to Figs. 21, 22, 23, 24, 25, 26 and 27. Fig. 21 depicts an example of a security system, Fig. 22 depicts an example of users' authority, Fig. 23 depicts an example of move paths of a user, Fig. 24 depicts an example of changing users' authority, Fig. 25 depicts an authority level-usable information conversion table, Fig. 26 depicts an example of users' authority using authority levels and Fig. 27 depicts an example of changing authority using authority levels. Figs. 21 to 27 are one example, and the present invention is not limited to such structure. In Figs. 21 and 23, the same components as Fig. 16 are denoted by the same reference numerals.

This example is a case where the above described security system 2B is used for an environment such as a plurality of rooms that a plurality of users use. The example depicts a changing example of authority to enter a room and to use a PC that changes according to a distance between users.

The rooms A and B are disposed as monitored areas in the building 90 as an environment where the security system 2B is disposed as depicted in Fig. 21. The corridor 92 is disposed as a path for being through each room. A PC α, PC β and PC γ are disposed in the room A as a plurality of PCs. The door 14 A and the authentication apparatus 6A are disposed at an entrance of the room A, and the door 14 B and the authentication apparatus 6B are disposed at an entrance of the room B. In this case, for unlocking the door 14A, authentication by an authentication apparatus thereof is needed. The PCs α, β and γ are a system which needs authentication for logging in.

In this case, users 1 and 2 (Fig. 23) are assumed. Each user has different authority to enter a room and to user a PC (Fig. 22). Concerning authority to enter a room and to use a PC, as depicted in Fig. 22, the user 1 has authority to enter the rooms A and B and to use PCs α and β, and the user 2 has authority to enter the room A and to use PCs α and γ.

In this case, the user 1 moves, as depicted in Fig. 23, through move paths 214 and 216, and the user 2 is in the room A. Authority of the user 1 is changed according to a move thereof as depicted in Fig. 24. Since authentication is not executed at a time point when the user 1 enters the corridor 92, it is not known who a user is. Thus, tracing data ID and a current position are newly added to the person information database 22B by discovery of a new person, however, user ID corresponding thereto is "absence", authority to enter a room is all "x", and authority to use a PC is all "x" (f31). At a time point when the user 1 is authenticated and determined to be the user 1, in the person information database 22B, user ID is set to "user 1", authority to enter the rooms A and B is rewritten to "○" as authority to enter a room that the user 1 has, authority to use the PCs α and β is rewritten to "○" as authority to use a PC that the user 1 has, thus, authority to enter the rooms A and B, and to use PCs α and β are given (f32). Since authority to use a PC is also obtained once authentication is executed, a PC can be used without re-authentication. However, it is possible that the user 2 is erroneously recognized as the user 1 if the user 1 approaches the user 2 after the user 1 enters the room A. Then, the user 1 loses authority to use a PC and to enter a room that the approached person (user 2) does not have, and the user 2 loses authority to use a PC and to enter a room that an approaching person (user 1) does not have. In short, in this case, both users A and B result in having authority to use the PC α and to enter the room A that is calculated from a logical AND of both users' authority (f33). In this time, in the person information database 22B, the authority of the user 1 to use the PC β, to enter the room B and authority of the user 2 to use the PC γ are rewritten to "x". The user 1 can log in to the PC β by rewriting authority to use the PC β and to enter the room B in the person information database 22B into "○" with authentication by the authentication apparatus 6A of a PC and a door again.

If an authority level-usable information conversion table 218 (Fig. 25) which a relationship between an authority level and authority to enter a room and to use a PC is prescribed without deciding presence or not of authority to enter each room is used, an effect is the same as the above description if a use authority level is set for each user. In this authority level-usable information conversion table 218, as depicted in Fig. 25, authority to enter each room 222 is set for an authority level 220. Five authority levels "0" to "4" are set for the authority level 220. The authority level "0" means that there is no authority to enter all the rooms A to D and to use the PCs α, β and γ. The authority level "1" means that there is authority to enter only the room A and to use only the PC α. The authority level "2" means that there is authority to enter only the room A and to use the PCs α and β . The authority level "3" means that there is authority to enter only the room A and to use the PCs α, β and γ. The authority level "4" means that there is authority to enter the rooms A and B and to use the PCs α, β and γ.

Information such as user ID managing authentication information of a user, a name of a registered person, registered authentication information for determining whether to be an original person compared with authentication information, authority level which a person has is registered. In the person information database 22B, as depicted in Figs. 12 and 13, tracing data ID managing tracing data, user ID representing whose the tracing data is, a current authority level, a current person's position, a move trace, etc. are registered for each person.

In this authority level (Fig. 26), the authority level is changed as depicted in Fig. 27. Since authentication is not executed when the user 1 enters the corridor 92, it is not known who a user is. Thus, tracing data ID and a current position are newly added to the person information database 22B by discovery of a new person, however, user ID corresponding thereto is "absence", and an authority level is all "0" which means "×" (f41).

At a time point when the user 1 is authenticated and determined to be the user 1, in the person information database 22B, user ID is set to "user 1", an authority level that the user 1 has is "4", and the user 1 can enter the rooms A and B and use the PCs α and β according to this authority level (f42).

Since authority to use a PC is also obtained once authentication is executed, a PC can be used without re-authentication. However, it is possible that the user 2 is erroneously recognized as the user 1 if the user 1 approaches the user 2 after the user 1 enters the room A. Then, authority levels of the user 1 and the user 2 are compared, and both authority levels are set to a lower level out of both levels. In short, since the authority levels are set to a lower level of both levels in this case, an authority level "2" of the user 2 is given to the user 1, and in the person information database 22B, the authority level of the user 1 is rewritten into "2" (f43).

The authority level of the user 1 in the person information database 22B is rewritten into the original level "4" by authentication by an authentication apparatus of a PC and a door again to allow to log in to the PC β and to enter the room B (f44).

As described above, in the second embodiment, when a person approaches another person who has lower authority than the person and it is unknown which has authority after the person is authenticated, use authority is lowered. Thus, there is not a case where a person who does not have use authority is erroneously permitted to enter a room or to log in to a PC, and lowering security can be prevented.

### Third Embodiment

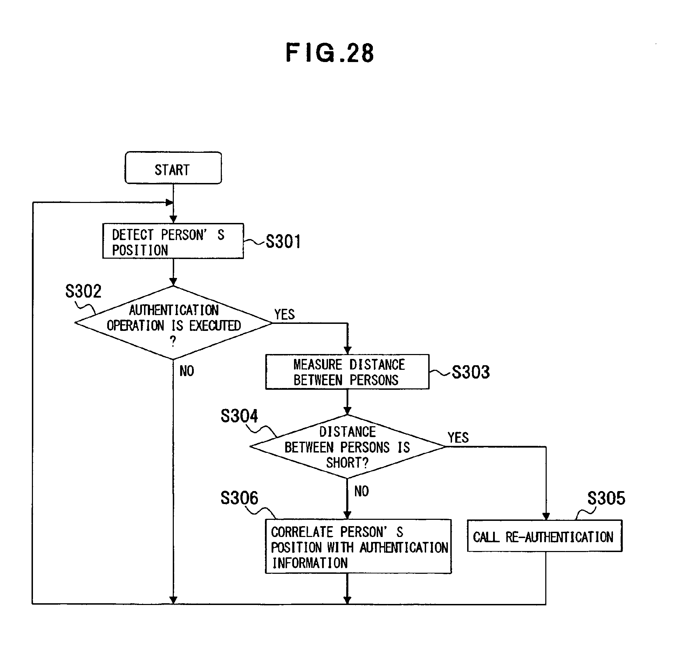

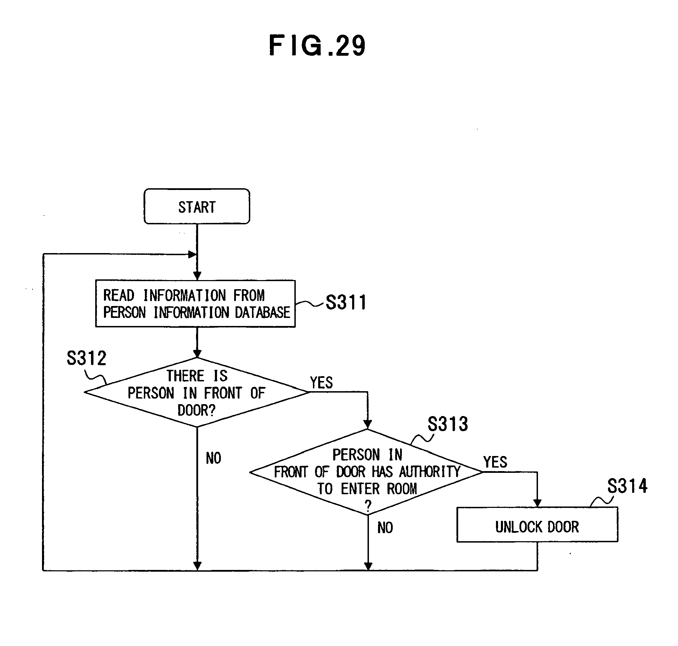

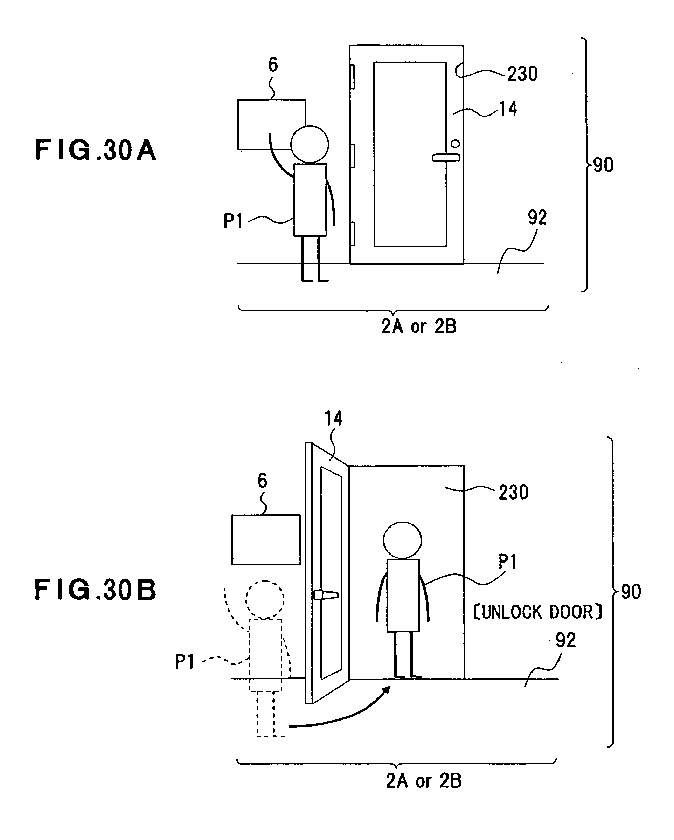

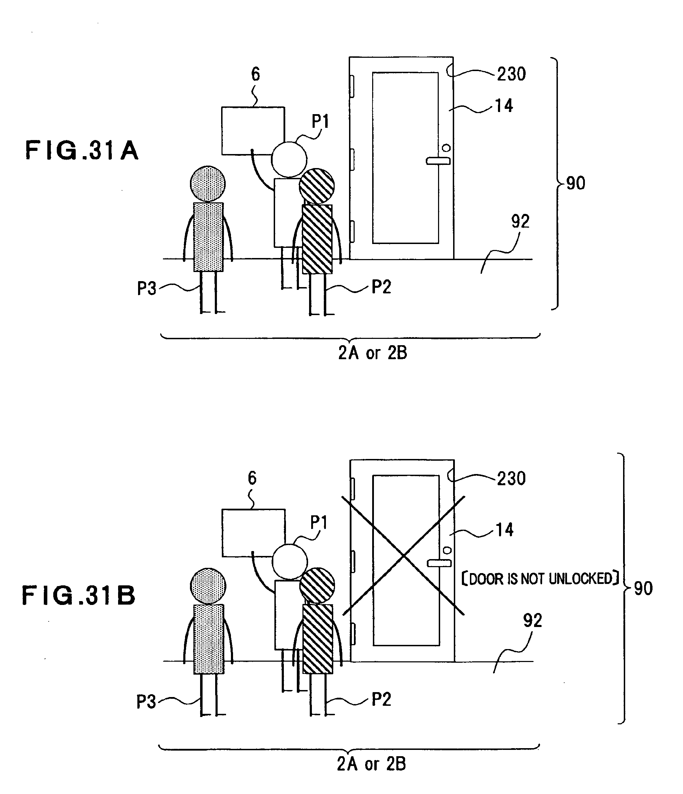

A third embodiment is described with reference to Figs. 28, 29, 30A, 30B, 31A and 31B. Fig. 28 is a flowchart depicting processing procedure of a management process of a use' s state according to the third embodiment, Fig. 29 is a flowchart depicting processing procedure of a control process of opening and closing a door according to the third embodiment, Figs. 30A and 30B depict an example of an authentication operation, and Fig. 31A and 31B depict an example of another authentication operation. Structure depicted in Figs. 28-31B is one example, and the present invention is not limited in such structure. In Figs. 30A, 30B, 31A and 31B, the same components as Figs. 1, 7 and 9 are denoted by the same reference numerals.

A security system according to the third embodiment has the same configuration as the security system 2A of the first embodiment. Thus, description about a configuration of a device refers to Fig. 1, and the description thereabout is omitted.

In this security system according to the third embodiment, processing procedure of a managing process of a user's state (Fig. 28) and processing procedure of a controlling process of opening and closing a door (Fig. 29) are carried out simultaneously.

In processing procedure of a managing process of a user's state, as depicted in Fig. 28, a person's position is detected (step S301), and whether an authentication operation is carried out or not is determined (step S302). If an authentication operation is carried out (YES of step S302), a distance between persons is measured (step S303), the distance between persons is short or not is determined (step S304), if distance between persons is short (YES of step S304) re-authentication is called (step S305) and the procedure returns to step S301. If the distance between persons is not short (NO of step S304), a person' s position and authentication information are correlated (step S306), the procedure returns to step S301, each person is monitored, and the processes of steps S302-S306 are carried out.

In this processing procedure, in step S301, a position of a person who is always within a monitored range is grasped by the person position detection and tracing unit 26 based on an image obtained from the imaging devices 12A and 12B. In this embodiment, as depicted in Fig. 7, the imaging devices 12A, 12B, 12C, 12D and 12E are disposed at every place such as the rooms A, B, C and D, and the corridor 92. Thus, a person is traced continuously wherever the person is. A person position is stored into the person information database 22A by obtained person ID at any time. Since it is not known who a person detected for the first time is, initialization is executed so as not to have all of user ID and authority to enter a room.

In step S302, when a user enters a room, authentication is executed by an authentication apparatus. In this case, by a method displaying a dialog for user authentication on a display of the display 45 (Fig. 2) to execute authentication using a user and a password, and an authentication method utilizing an authentication apparatus using veins and fingerprints, verification with the authentication information database 20A is executed to specify an individual. If authentication is not executed because there is no registration in the authentication information database 20A in advance, etc., the procedure transmits to step S301.

In step S303, when authentication is executed in step S302, a positional relationship among persons on the periphery of the authentication apparatus 6 where authentication is executed is checked by a person position stored in the person information database 22A (step S304). At that time, if a state where a distance between a person who is considered to be authenticated and a person on the periphery of the authentication apparatus 6 is equal to or below a predetermined distance is detected (YES of step S304), an authentication result is not correlated with a person, it is informed to a user that authority to enter a room is not given, and re-authentication is called (step S305). This call may be executed via the display 45.

If the state is not detected (NO of step S304), authentication information and a person's position are correlated from a positional relationship between an authenticated person and a place where authentication is performed (step S306). Concretely, a position of the authentication apparatus 6 and authentication apparatus ID are correlated in advance, and user ID determined by authentication is registered to a user of tracing data ID who is the nearest position to a place of the authentication apparatus 6 where authentication is executed. At the same time, since authority to enter a room and to use a PC corresponding to a user (second embodiment) also becomes clear, use authority in the person information database 22A (Fig. 1) or the person information database 22B (Fig. 16) is updated.

Through step S305 or step S306, the procedure returns to step S301, and the above described processes are repeated.

In the processing procedure of controlling opening and closing a door, as depicted in Fig. 29, the person information database 22A is accessed, and a person position, user ID, authority to enter a room, etc. are read out (step S311). After this process, it is confirmed if there is a person on the periphery of each door by using a person position (step S312), and if there is not a person in front of each door, the procedure returns to step S311.

If there is a person on the periphery of each door (YES of step S312), it is determined whether the person on the periphery of the door has authority to enter a room through the door (step S313), and if the person on the periphery of the door has authority to enter a room through the door (YES of step S313), the door is unlocked (step S314).

After passing through step S313 or step S314, the procedure returns to step S311, and the above described processes are repeated.

Concerning operating under such environment, in an authentication operation when authentication is executed to only one person (Figs. 30A and 30B), as depicted in Fig. 30A, a user P1 obtains authority to enter a room 230 where the authentication apparatus 6 is disposed by authentication with using the authentication apparatus 6. If the user P1 who has the authority to enter the room 230 goes in front of the door 14 of the room 230, as depicted in Fig. 30B, the door 14 is unlocked, and the user P1 can enter the room 230.

For such one person authentication, if, when an authenticated operation is carried out to the user P1, there are users P2 and P3 on the periphery of the user P1 as another person or a plurality of the others as depicted in Fig. 31A, it is possible that an authentication result is not correctly correlated with an authenticated original even if authentication of the user P1 is correctly executed. Thus, in such case, authority to enter a room is not given, a message that authority to enter a room is not given is informed, and an instruction that re-authentication is promoted is outputted after sending an instruction to near persons to separate from the user P1.

Such operation can prevent logging in by others who do not have use authority concerning logging in to a PC.

As described above, since authority is not given when it is unclear to whom authority is given at a time point when authentication is executed, there is not a case where a system erroneously permits a person who does not have authority to enter a room or to log in to a PC, and lowering security can be prevented.

Technical ideas are then enumerated that are extracted from the embodiments of the present invention described above. The technical ideas according to the present invention, from superordinate concepts to subordinate concepts, can be grasped at various levels and in various variations and the present invention is not limited to the following description.

In the above security system, preferably, the use authority control unit may set use authority of the same or a different level to users based on the authentication, and, if a distance between the users is equal to or below a predetermined value, the use authority which is set for each user may be changed to use authority of the lowest level.

The above security system may preferably include a user trace unit to trace an authenticated user, wherein the use authority control unit maintains the use authority or the changed use authority of the user based on tracing of the user tracing unit.

According to such structure, use authority of an authenticated user is maintained based on tracing information in a user tracing unit. Use authority thereof is original use authority or use authority lowered by the above described contact with another person. Thus, use authority can be maintained without repeated authentication, and convenience can be enhanced without lowering security level.

In above the security system, preferably, the use authority control unit may set the use authority for every service, and, if a distance between users is equal to or below a predetermined value, the use authority which is ser for each user may be changed into use authority which is calculated from a logical conjunction with service.

In the above security system, preferably, the use authority control unit may lower or cancel the use authority of each user if a distance between users is equal to or below a predetermined value.

In the above security system, preferably, the use authority control unit may receive new use authority by a user whose use authority is changed being authenticated again.

In the above security system, preferably, the use authority control unit may not give the use authority to the authenticated user if it is detected that a distance between the authenticated user and another user is equal to or below a predetermined value.

In the above security system, preferably, the use authority control unit may include a notification unit to notify that the use authority is not given when authenticated if it is detected that a distance between the authenticated user and another user is equal to or below a predetermined value.

The above security method may preferably include setting use authority of the same or a different level to users based on the authentication, and, if a distance between the users is equal to or below a predetermined value, changing the use authority which is set for each user to use authority of the lowest level.

The above security method may preferably include maintaining the use authority or changed use authority of the user based on tracing information of the authenticated user.

The above security method may preferably include setting the use authority for every service, and, if a distance between users is equal to or below a predetermined value, changing the use authority which is set for each user into use authority which is calculated from a logical conjunction with service.

The above security method may preferably include lowering or canceling the use authority of each user if a distance between users is equal to or below a predetermined value.

The above security method may preferably include receiving new use authority by a user whose use authority is changed being authenticated again.

The above security method may preferably include not giving the use authority to the authenticated user if it is detected that a distance between the authenticated user and another user is equal to or below a predetermined value.

The above security method may preferably include notifying that the use authority is not given when authenticated if it is detected that a distance between the authenticated user and another user is equal to or below a predetermined value.

In the above recording medium, the program may preferably include setting use authority of the same or a different level to users based on the authentication, and, if a distance between the users is equal to or below a predetermined value, changing the use authority which is set for each user to use authority of the lowest level.

In the above recording medium, the program may preferably include maintaining the use authority or changed use authority of the user based on tracing information of the authenticated user.

In the above recording medium, the program may preferably include setting the use authority for every service, and, if a distance between users is equal to or below a predetermined value, changing the use authority which is set for each user into use authority which is calculated from a logical conjunction with service.

In the above recording medium, the program may preferably include lowering or canceling the use authority of each user if a distance between users is equal to or below a predetermined value.

In the above recording medium, the program may preferably include receiving new use authority by a user whose use authority is changed being authenticated again.

In the above recording medium, the program may preferably include not giving the use authority to the authenticated user if it is detected that a distance between the authenticated user and another user is equal to or below a predetermined value.

The above recording medium may preferably include notifying that the use authority is not given when authenticated if it is detected that if a distance between the authenticated user and another user is equal to or below a predetermined value.

According to the embodiments of the present invention, following effects can be obtained.
(1) A user can use provided service, etc. in a specific area based on use authority given by being authenticated. Convenience such that once authenticated, use authority is maintained without requesting authentication repeatedly can be enhanced, and use by another person who does not have use authority can be prevented.
(2) A position and a move of an authenticated user are monitored in a specific area. If a distance from another user becomes a predetermined value or below the predetermined value, use authority of a user is changed, for example, into equal or lower one than that each user has in common. Thus, use by another person who does not have use authority can be prevented, and lowering security can be prevented.
(3) Use by another person who does not have use authority can be prevented, a position and move of a user can be traced, and an authentication result is correlated with a move trace. Thus, after once authentication, repeated authentication is avoided to prevent lowering security, and to allow enhancing convenience.

While the embodiments of the present invention are described hereinabove, the present invention is not limited to the above embodiments, and it is a matter of course that various variations and modifications can be made by those skilled in the art within the scope of the claims without departing from the spirit of the invention disclosed in the description of the embodiments, and needless to say, such variations and modifications are also encompassed in the scope of the present invention.

The present invention is related to security in using facilities, etc., reduces the number of an authentication request to enhance convenience, and prevents use of use authority given from the authentication by another person. Based on use authority given by a user being authenticated, the user can use provided service, etc. in a specific area, and once authenticated, use authority is maintained without requesting authentication repeatedly, thus convenience can be enhanced. Since use by another person who does not have use authority can be prevented, a position and move of the user are traced, and an authenticated result is correlated with a move trace, repeated authentication after once authentication is avoided to prevent lowering security, and convenience can be enhanced. Thus, the present invention can be used in an area such as research facilities where high security is needed, and is useful.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention.

## Claims

1. A security system to give a user in a specific area use and move authority based on authentication, and to permit use of the specific area by the use and move authority, the security system comprising:
an authentication unit (6, 24) to authenticate a user;
a position detection unit (8, 26) to detect a position and a move trace (68) of a user, the user being within a monitored range, the monitored range being set for monitoring a user to whom the use and move authority for the specific area is given based on authentication of the authentication unit; and
a use and move authority control unit (4A) to monitor the position and the move trace (68) of the user to whom the use and move authority is given by a detection output of the position detection unit, and, if a distance between users is equal to or below a predetermined value, to change the use and move authority which is given to each user.

2. The security system of claim 1, wherein
the use and move authority control unit (4A) sets use and move authority of the same or a different level to users based on the authentication, and, if a distance between the users is equal to or below a predetermined value, the use and move authority which is set for each user is changed to use and move authority of the lowest level.

3. The security system of claim 1, further comprising:
a user trace unit (26) to trace an authenticated user,
wherein the use and move authority control unit maintains the use and move authority or changed use and move authority of the user based on tracing of the user tracing unit.

4. The security system of claim 1, wherein
the use and move authority control unit (4A) sets the use and move authority for every service, and, if a distance between users is equal to or below a predetermined value, the use and move authority which is set for each user is changed into use and move authority which is calculated from a logical conjunction with service.

5. The security system of claim 1, wherein
the use and move authority control unit (4A) lowers or cancels the use and move authority of each user if a distance between users is equal to or below a predetermined value.

6. The security system of claim 1, 2, 3, 4 or 5, wherein
the use and move authority control unit (4A) may receive new use and move authority by a user whose use and move authority is changed being authenticated again.

7. The security system of claim 1, wherein
the use and move authority control unit (4A) does not give the use and move authority to the authenticated user if it is detected that a distance between the authenticated user and another user is equal to or below a predetermined value.

8. The security system of claim 7, wherein
the use and move authority control unit (4A) includes a notification unit to notify that the use and move authority is not given when authenticated if it is detected that a distance between the authenticated user and another user is equal to or below a predetermined value.

9. A security method to give a user in a specific area use and move authority based on authentication, and to permit use of the specific area by the use and move authority, the security method comprising:
authenticating a user;
detecting a position and a move trace (68) of a user, the user being within a monitored range, the monitored range being set for monitoring a user to whom the use and move authority for the specific area is given based on said authenticating; and
monitoring the position and the move trace (68) of the user to whom the use and move authority is given, and, if a distance between users is equal to or below a predetermined value, changing the use and move authority which is given to each user.

10. A computer-readable recording medium storing a security program that includes a function to give a user in a specific area use and move authority based on authentication, and to permit use of the specific area by the use and move authority, and that causes a computer to execute the function, the program comprising:
authenticating a user;
taking in detection information representing a position and a move trace (68) of a user, the user being within a monitored range, the monitored range being set for monitoring a user to whom the use and move authority for the specific area is given based on said authenticating; and
monitoring the position and the move trace (68) of the user to whom the use and move authority is given by the detection information, and, if a distance between users is equal to or below a predetermined value, changing the use and move authority which is given to each user.

## Patentansprüche

1. Sicherheitssystem, um einem Nutzer in einem bestimmten Bereich eine Verwendungs- und Bewegungsberechtigung auf Grundlage einer Authentifizierung zu geben und eine Verwendung des bestimmten Bereichs durch die Verwendungs- und Bewegungsberechtigung zu erlauben, wobei das Sicherheitssystem umfasst:
eine Authentifizierungseinheit (6, 24) zum Authentifizieren eines Nutzers;
eine Positionserfassungseinheit (8, 26) zum Erfassen einer Position und Bewegungsverfolgung (68) eines Nutzers, wobei der Nutzer in einem überwachten Bereich ist, der überwachte Bereich zum Überwachen eines Nutzers eingestellt ist, an den die Verwendungs- und Bewegungsberechtigung für den bestimmten Bereich auf Grundlage einer Authentifizierung der Authentifizierungseinheit vergeben ist; und
eine Verwendungs- und Bewegungsberechtigungs-Steuereinheit (4A) zum Überwachen der Position und der Bewegungsverfolgung (68) des Nutzers, an den die Verwendungs- und Bewegungsberechtigung durch eine Erfassungsausgabe der Positionserfassungseinheit vergeben wird, und, wenn ein Abstand zwischen Nutzern gleich oder unterhalb eines vorbestimmten Werts ist, zum Ändern der Verwendungs- und Bewegungsberechtigung, die an jeden Nutzer vergeben ist.

2. Sicherheitssystem nach Anspruch 1, wobei
die Verwendungs- und Bewegungsberechtigungs-Steuereinheit (4A) die Verwendungs- und Bewegungsberechtigung der gleichen oder einer unterschiedlichen Stufe an Nutzer auf Grundlage der Authentifizierung einstellt, und wobei, wenn ein Abstand zwischen den Nutzern gleich oder unterhalb eines vorbestimmten Werts ist, die Verwendungs- und Bewegungsberechtigung, die für jeden Nutzer eingestellt ist, auf eine Verwendungs- und Bewegungsberechtigung der untersten Stufe geändert wird.

3. Sicherheitssystem nach Anspruch 1, ferner umfassend:
eine Nutzerverfolgungseinheit (26) zum Verfolgen eines authentifizierten Nutzers, wobei die Verwendungs- und Bewegungsberechtigungs-Steuereinheit die Verwendungs- und Bewegungsberechtigung oder die geänderte Verwendungs- und Bewegungsberechtigung des Nutzers auf Grundlage des Verfolgens der Nutzerverfolgungseinheit beibehält.

4. Sicherheitssystem nach Anspruch 1, wobei
die Verwendungs- und Bewegungsberechtigungs-Steuereinheit (4A) die Verwendungs- und Bewegungsberechtigung für jeden Dienst einstellt, und, wenn ein Abstand zwischen Nutzern gleich oder unterhalb eines bestimmten Werts ist, die Verwendungs- und Bewegungsberechtigung, die für jeden Nutzer eingestellt ist, in eine Verwendungs- und Bewegungsberechtigung ändert, die aus einer logischen Verknüpfung mit einem Dienst berechnet wird.

5. Sicherheitssystem nach Anspruch 1, wobei
die Verwendungs- und Bewegungsberechtigungs-Steuereinheit (4A) die Verwendungs- und Bewegungsberechtigung von jedem Nutzer verringert oder löscht, wenn ein Abstand zwischen Nutzern gleich oder unterhalb eines vorbestimmten Werts ist.

6. Sicherheitssystem nach Anspruch 1, 2, 3, 4 oder 5, wobei die Verwendungs- und Bewegungsberechtigungs-Steuereinheit (4A) eine neue Verwendungs- und Bewegungsberechtigung durch einen Nutzer empfangen kann, dessen Verwendungs- und Bewegungsberechtigung durch erneute Authentifizierung geändert ist.

7. Sicherheitssystem nach Anspruch 1, wobei
die Verwendungs- und Bewegungsberechtigungs-Steuereinheit (4A) dem authentifizierten Nutzer die Verwendungs- und Bewegungsberechtigung nicht gibt, wenn erfasst wird, dass ein Abstand zwischen dem authentifizierten Nutzer und einem anderen Nutzer gleich oder unterhalb eines vorbestimmten Schwellenwerts ist.

8. Sicherheitssystem nach Anspruch 7, wobei
die Verwendungs- und Bewegungsberechtigungs-Steuereinheit (4A) eine Benachrichtigungseinheit enthält, für eine Benachrichtigung, dass die Verwendungs- und Bewegungsberechtigung beim Authentifizieren nicht gegeben wird, wenn erfasst wird, dass ein Abstand zwischen dem authentifizierten Nutzer und einem anderen Nutzer gleich oder unterhalb eines vorbestimmten Werts ist.

9. Sicherheitsverfahren, um einem Nutzer in einem bestimmten Bereich eine Verwendungs- und Bewegungsberechtigung auf Grundlage einer Authentifizierung zu geben und die Verwendung des bestimmten Bereichs durch die Verwendungs- und Bewegungsberechtigung zu erlauben, wobei das Sicherheitsverfahren umfasst:
Authentifizieren eines Nutzers;
Erfassen einer Position und einer Bewegungsverfolgung (68) eines Nutzers, wobei der Nutzer in einem überwachten Bereich ist, der überwachte Bereich zum Überwachen eines Nutzers eingestellt ist, dem die Verwendungs- und Bewegungsberechtigung für den bestimmten Bereich auf Grundlage der Authentifizierung gegeben ist; und
Überwachen der Position und der Bewegungsverfolgung (68) des Nutzers, an den die Verwendungs- und Bewegungsberechtigung gegeben ist, und, wenn ein Abstand zwischen Nutzern gleich oder geringer einem vorbestimmten Wert ist, Ändern der Verwendungs- und Bewegungsberechtigung, die an jeden Nutzer gegeben ist.

10. Computer-lesbares Aufzeichnungsmedium, das ein Sicherheitsprogramm speichert, das eine Funktion enthält, um einem Nutzer in einem bestimmten Bereich eine Verwendungs- und Bewegungsberechtigung auf Grundlage einer Authentifizierung zu geben und eine Verwendung des bestimmten Bereichs durch die Verwendungs- und Bewegungsberechtigung zu erlauben, und das bewirkt, dass ein Computer die Funktion ausführt, wobei das Programm umfasst:
Authentifizieren eines Nutzers;
Aufnehmen einer Erfassungsinformation, die eine Position und eine Bewegungsverfolgung (68) eines Nutzers angibt, wobei der Nutzer in einem überwachten Bereich ist, wobei der überwachte Bereich zum Überwachen eines Nutzers eingestellt ist, dem die Verwendungs- und Bewegungsberechtigung für den bestimmten Bereich auf Grundlage der Authentifizierung gegeben ist; und
Überwachen der Position und der Bewegungsverfolgung (68) des Nutzers, an den die Verwendungs- und Bewegungsberechtigung durch die Erfassungsinformation gegeben ist, und, wenn ein Abstand zwischen Nutzern gleich oder unterhalb eines vorbestimmten Werts ist, Ändern der Verwendungs- und Bewegungsberechtigung, die an jeden Nutzer gegeben ist.

## Revendications

1. Système de sécurité pour donner à un utilisateur situé dans une zone spécifique une autorité d'utilisation et de déplacement basée sur une authentification, et pour permettre l'utilisation de la zone spécifique par l'autorité d'utilisation et de déplacement, le système de sécurité comprenant :
une unité d'authentification (6, 24) pour authentifier un utilisateur ;
une unité de détection de position (8, 26) pour détecter une position et un suivi de déplacement (68) d'un utilisateur, l'utilisateur se trouvant dans une portée contrôlée, la portée contrôlée étant définie pour contrôler un utilisateur auquel l'autorité d'utilisation et de déplacement pour la zone spécifique est donnée sur la base de l'authentification de l'unité d'authentification ; et
une unité de commande d'autorité d'utilisation et de déplacement (4A) pour contrôler la position et le suivi de déplacement (68) de l'utilisateur auquel l'autorité d'utilisation et de déplacement est donnée par une sortie de détection de l'unité de détection de position, et, si une distance entre utilisateurs est inférieure ou égale à une valeur prédéterminée, pour changer l'autorité d'utilisation et de déplacement qui est donnée à chaque utilisateur.

2. Système de sécurité selon la revendication 1, dans lequel
l'unité de commande d'autorité d'utilisation et de déplacement (4A) définit une autorité d'utilisation et de déplacement du même niveau ou d'un niveau différent pour les utilisateurs sur la base de l'authentification, et, si une distance entre les utilisateurs est inférieure ou égale à une valeur prédéfinie, l'autorité d'utilisation et de déplacement qui est définie pour chaque utilisateur est changée en une autorité d'utilisation et de déplacement du niveau le plus bas.

3. Système de sécurité selon la revendication 1, comprenant en outre :
une unité de suivi d'utilisateur (26) pour suivre un utilisateur authentifié, dans laquelle l'unité de commande d'autorité d'utilisation et de déplacement maintient l'autorité d'utilisation et de déplacement ou change l'autorité d'utilisation et de déplacement de l'utilisateur sur la base du suivi de l'unité de suivi d'utilisateur.

4. Système de sécurité selon la revendication 1, dans lequel
l'unité de commande d'autorité d'utilisation et de déplacement (4A) définit l'autorité d'utilisation et de déplacement pour chaque service, et, si une distance entre utilisateurs est inférieure ou égale à une valeur prédéterminée, l'autorité d'utilisation et de déplacement qui est définie pour chaque utilisateur est changée en une autorité d'utilisation et de déplacement qui est calculée à partir d'une conjonction logique avec le service.

5. Système de sécurité selon la revendication 1, dans lequel
l'unité de commande d'autorité d'utilisation et de déplacement (4A) diminue ou annule l'autorité d'utilisation et de déplacement de chaque utilisateur si une distance entre utilisateurs est inférieure ou égale à une valeur prédéfinie.

6. Système de sécurité selon la revendication 1, 2, 3, 4 ou 5, dans lequel l'unité de commande d'autorité d'utilisation et de déplacement (4A) peut recevoir une nouvelle autorité d'utilisation et de déplacement par un utilisateur, dont l'autorité d'utilisation et de déplacement est changée, à nouveau authentifié.

7. Système de sécurité selon la revendication 1, dans lequel
l'unité de commande d'autorité d'utilisation et de déplacement (4A) ne donne pas l'autorité d'utilisation et de déplacement à l'utilisateur authentifié si l'on détecte qu'une distance entre l'utilisateur authentifié et un autre utilisateur est inférieure ou égale à une valeur prédéterminée.

8. Système de sécurité selon la revendication 7, dans lequel
l'unité de commande d'autorité d'utilisation et de déplacement (4A) comprend une unité de notification pour notifier que l'autorité d'utilisation et de déplacement n'est pas donnée lorsque l'on est authentifié si l'on détecte qu'une distance entre l'utilisateur authentifié et un autre utilisateur est inférieure ou égale à une valeur prédéterminée.

9. Procédé de sécurité pour donner à un utilisateur situé dans une zone spécifique une autorité d'utilisation et de déplacement basée sur une authentification, et pour permettre l'utilisation de la zone spécifique par l'autorité d'utilisation et de déplacement, le procédé de sécurité comprenant les étapes consistant à :
authentifier un utilisateur ;
détecter une position et un suivi de déplacement (68) d'un utilisateur, l'utilisateur se trouvant dans une portée contrôlée, la portée contrôlée étant définie pour contrôler un utilisateur auquel l'autorité d'utilisation et de déplacement pour la zone spécifique est donnée sur la base de ladite authentification ; et
contrôler la position et le suivi de déplacement (68) de l'utilisateur auquel l'autorité d'utilisation et de déplacement est donnée, et, si une distance entre utilisateurs est inférieure ou égale à une valeur prédéterminée, changer l'autorité d'utilisation et de déplacement qui est donnée à chaque utilisateur.

10. Support d'enregistrement lisible par ordinateur stockant un programme de sécurité qui comprend une fonction pour donner à un utilisateur situé dans une zone spécifique une autorité d'utilisation et de déplacement basée sur une authentification, et pour permettre l'utilisation de la zone spécifique par l'autorité d'utilisation et de déplacement, et qui amène un ordinateur à exécuter la fonction, le programme comprenant les étapes consistant à :
authentifier un utilisateur ;
prendre des informations de détection représentant une position et un suivi de déplacement (68) d'un utilisateur, l'utilisateur se trouvant dans une portée contrôlée, la portée contrôlée étant définie pour contrôler un utilisateur dont l'autorité d'utilisation et de déplacement pour la zone spécifique est donnée sur la base de ladite authentification ; et
contrôler la position et le suivi de déplacement (68) de l'utilisateur auquel l'autorité d'utilisation et de déplacement est donnée par les informations de détection, et, si une distance entre utilisateurs est inférieure ou égale à une valeur prédéfinie, changer l'autorité d'utilisation et de déplacement qui est donnée à chaque utilisateur.
